# EUROPEAN PATENT APPLICATION

(11) **EP 4 686 268 A1**
(43) Date of publication of application: **28.01.2026**
(21) Application number: 24784113.3
(22) Date of filing: 26.03.2024
(51) Int. Cl.: H04W 48/16

(54) **ACCESS METHOD AND APPARATUS**

(30) Priority: 07.04.2023 CN 202310405752
(71) Applicant: Huawei Technologies Co., Ltd., Shenzhen, Guangdong 518129 (CN)
(72) Inventor: SUN, Huan, Shenzhen, Guangdong 518129 (CN); LUO, Zhihu, Shenzhen, Guangdong 518129 (CN); HOU, Hailong, Shenzhen, Guangdong 518129 (CN)
(74) Representative: Grünecker Patent- und Rechtsanwälte PartG mbB
(86) International application number: PCT/CN2024/083856
(87) International publication number: WO 2024/208028

(57) **Abstract**

This application provides an access method and an apparatus. The method includes: A terminal device receives first information. The first information indicates that access of a first-type terminal device is barred or allowed, and the first-type terminal device meets a first condition. The terminal device accesses or is barred from accessing the network device based on the first information. By implementing the foregoing method, access control can be performed on the terminal device.

## Description

### CROSS-REFERENCE TO RELATED APPLICATIONS

This application claims priority to Chinese Patent Application No. 202310405752.5, filed with the China National Intellectual Property Administration on April 7, 2023 and entitled "ACCESS METHOD AND APPARATUS", which is incorporated herein by reference in its entirety.

### TECHNICAL FIELD

This application relates to the field of communication technologies, and in particular, to an access method and an apparatus.

### BACKGROUND

In a 3rd generation partnership project (3rd generation partnership project, 3GPP) mobile communication network, the network needs to perform access control on a terminal device, that is, the network can control whether access of the terminal device is allowed. With evolution of mobile communication technologies, a plurality of types of terminal devices are defined. Different types of terminal devices have different capabilities, for example, different indicated radio frequency bandwidths, and different supported peak rates.

Therefore, in the mobile communication network, how to implement access control on the terminal device is an urgent problem to be resolved.

### SUMMARY

This application provides an access method and an apparatus, to perform access control on a terminal device.

According to a first aspect, this application provides an access method. The method is performed by a terminal device or a module or a chip in the terminal device. An example in which the method is performed by the terminal device is used for description herein. The method includes: receiving first information, where the first information indicates that access of a first-type terminal device is barred or allowed, a baseband processing bandwidth of the first-type terminal device is less than a maximum transmission bandwidth, a peak data transmission rate of the first-type terminal device is less than a peak data transmission rate of a second-type terminal device, a baseband processing bandwidth of the second-type terminal device is equal to a maximum transmission bandwidth, or the first-type terminal device meets a first condition; and accessing or being barred from accessing a network device based on the first information.

With reference to the first aspect, the first information is barring or not barring access, to a network, of a first-type terminal device that supports a peak data rate of a first value. Alternatively, in an example, the first value may be a value less than or equal to 10 Mbps. For example, the first value is 10 Mbps.

In another example, the first value may be a value less than or equal to 6 Mbps. For example, the first value is 6 Mbps.

With reference to the first aspect, the first information is barring or not barring the access, to the network, of the first-type terminal device that supports the peak data rate of the first value. The first value is related to a product of a layer number, a modulation order, and a scaling factor.

The layer number may be specified by a higher layer parameter. For example, the layer number may be a maximum supported layer number specified by higher layer parameters: maxNumberMIMO-LayersPDSCH (maxNumberMIMO-LayersPDSCH), maxNumberMIMO-LayersCB-PUSCH (maxNumberMIMO-LayersCB-PUSCH), and maxNumberMIMO-LayersNonCB-PUSCH (maxNumberMIMO-LayersNonCB-PUSCH). MIMO represents multiple-input multiple-output (multiple-input multiple-output), and PUSCH represents a physical uplink shared channel (physical uplink shared channel).

The modulation order may be specified by a higher layer parameter. For example, the modulation order may be a maximum supported modulation order specified by higher layer parameters: supportedModulationOrderDL (supportedModulationOrderDL) and supportedModulationOrderUL (supportedModulationOrderUL). UL indicates an uplink (uplink) and DL indicates a downlink (downlink).

The scaling factor may be specified by a higher layer parameter. For example, the scaling factor may be a scaling factor specified by higher layer parameters: scalingFactor (scalingFactor) and scalingFactor-1024QAM-FR1 (scalingFactor-1024QAM-FR1). QAM represents quadrature amplitude modulation (quadrature amplitude modulation), and FR1 represents frequency range 1 (frequency range 1, FR1).

In an example, a minimum value of a product of the layer number, the modulation order, and the scaling factor is not greater than 3.2, and the first value is 10 Mbps. For example, the minimum value of the product of the layer number, the modulation order, and the scaling factor is 3 or 3.2, and the first value is 10 Mbps.

In another example, a minimum value of a product of the layer number, the modulation order, and the scaling factor is not greater than 1.92, and the first value is 6 Mbps. For example, the minimum value of the product of the layer number, the modulation order, and the scaling factor is 1 or 1.92, and the first value is 6 Mbps.

With reference to the first aspect, the first information is barring or not barring access, to the network, of a first-type terminal device meeting that the product of the layer number, the modulation order, and the scaling factor is greater than or equal to a second value.

In a possible implementation, a value of the second value is less than 4.

In an example, the value of the second value is not greater than 3.2, and a corresponding peak data rate is 10 Mbps. For example, the value of the second value is 3 or 3.2.

In another example, the value of the second value is not greater than 1.92, and a corresponding peak data rate is 6 Mbps. For example, the value of the second value is 1 or 1.92.

In another possible implementation, the second value may be a smaller value in a plurality of second values supported by a plurality of first-type terminal devices. For example, a first type of first-type terminal device supports a maximum baseband processing bandwidth of 20 MHz, a corresponding second value is K1, and K1 may be 1 or another value less than 3. A second type of first-type terminal device supports a maximum baseband processing bandwidth of 5 MHz, a corresponding second value is K2, and K2 may be 3.2 or another value greater than or equal to 3 and less than 4. In this case, the second value may be a smaller value in K1 and K2.

The plurality of first-type terminal devices may alternatively be understood as a plurality of first-type terminal devices that belong to a same type and have different capabilities.

In a possible design, the first condition may include at least one of the following: A radio frequency bandwidth of the first-type terminal device exceeds the baseband processing bandwidth; or the maximum transmission bandwidth supported by the first-type terminal device exceeds the baseband processing bandwidth; or a maximum scheduling bandwidth supported by the first-type terminal device exceeds the baseband processing bandwidth; or the maximum bandwidth supported by the first-type terminal device is greater than 5 MHz, for example, is 20 MHz; or a maximum bandwidth that is supported by the first-type terminal device and that can be used for sending in a single slot or a single frequency hop is 5 MHz; or a maximum bandwidth that is supported by the first-type terminal device and that can be processed in a single slot is 5 MHz.

Alternatively, the baseband processing bandwidth of the first-type terminal device may be replaced with the maximum baseband processing bandwidth, the maximum baseband processing bandwidth, a maximum baseband bandwidth, the maximum baseband bandwidth, a maximum bandwidth, a baseband bandwidth, a maximum bandwidth that is of a terminal apparatus and that can be used for sending in a single slot or a single frequency hop, or a maximum bandwidth that can be processed in a single slot of the terminal apparatus.

The scheduling bandwidth may be alternatively replaced with a scheduled transmission bandwidth, a scheduled downlink channel transmission bandwidth, or a scheduled uplink channel transmission bandwidth.

In a possible implementation, that the maximum bandwidth is 5 MHz may be replaced with the following: When a subcarrier spacing is 15 kHz, the maximum bandwidth is 25 RBs; or when the subcarrier spacing is 30 kHz, the maximum bandwidth is 12 RBs.

In a possible implementation, that the maximum bandwidth that is supported by the first-type terminal device and that can be used for sending in the single slot or the single frequency hop is 5 MHz includes: When the first-type terminal device sends the physical uplink shared channel PUSCH, the maximum bandwidth that is supported by the first-type terminal device and that can be used for sending in the single slot or the single frequency hop is 5 MHz.

In a possible implementation, that the maximum bandwidth that is supported by the first-type terminal device and that can be processed in the single slot is 5 MHz includes: When the first-type terminal device sends the physical uplink shared channel PDSCH, the maximum bandwidth that is supported by the first-type terminal device and that can be processed in the single slot is 5 MHz.

In a possible design, the first condition may further include: The first-type terminal device supports the peak data transmission rate of the first value; or the first-type terminal device supports the product of the layer number, the modulation order, and the scaling factor being greater than or equal to the second value.

In a possible design, the first condition may further include: The first-type terminal device operates in frequency range 1 (frequency range 1, FR1).

In a possible design, the method further includes: receiving second information. The second information indicates that access of the second-type terminal device to the network device is barred or allowed, and the second-type terminal device meets a second condition. Accessing or being barred from accessing the network device based on the first information may include: accessing or being barred from accessing the network device based on the first information and the second information.

In a possible design, the second condition may include at least one of the following: A maximum bandwidth supported by the second-type terminal device in FR1 is 20 MHz, and a maximum bandwidth supported in frequency range 2 (frequency range 2, FR2) is 100 MHz; a maximum data radio bearer (data radio bearer, DRB) number that is mandatory to be supported by the second-type terminal device is 8; a packet data convergence protocol sequence number size (packet data convergence protocol sequence number size, PDCP SN SIZE) that is mandatory to be supported by the second-type terminal device is 12, and a PDCP SN size that is optional to be supported is 18; a radio link control amplitude modulation sequence number size (radio link control amplitude modulation sequence number size, RLC AM SN SIZE) that is mandatory to be supported by the second-type terminal device is 12, and an RLC AM SN size that is optional to be supported is 18; when operating in FR1, a second-type terminal device that supports one receive antenna supports one downlink multiple-input multiple-output (multiple-input multiple-output, MIMO) layer, and a second-type terminal device that supports two receive antennas supports two downlink MIMO layers; when operating in FR2, the second-type terminal device always supports two receive antennas and one or two downlink MIMO layers; and the second-type terminal device does not support features or capabilities associated with carrier aggregation (carrier aggregation, CA), multi-rate dual connectivity (multi-rate dual connectivity, MR-DC), dual active protocol stack (dual active protocol stack, DAPS), conditional primary secondary cell addition or change (conditional PSCell addition/change, CPAC), and integrated access and backhaul (integrated access and backhaul, IAB).

In a possible design, the first information is included in system information block 1, or the first information and the second information are included in system information block 1.

In a possible design, the method further includes: The terminal device accesses or is barred from accessing the network device based on an IntraFreqReselection field included in system information block 1. Alternatively, the method further includes: System information block 1 includes a first IntraFreqReselection field, and the first IntraFreqReselection field indicates that the access of the first-type terminal device and the second-type terminal device to the network device is barred or allowed. Alternatively, system information block 1 includes the first IntraFreqReselection field and a second IntraFreqReselection field, the first IntraFreqReselection field indicates that the access of the first-type terminal device to the network device is barred or allowed, and the second IntraFreqReselection field indicates that the access of the second-type terminal device to the network device is barred or allowed. The terminal device determines, based on the first IntraFreqReselection field included in system information block 1, to access or to be barred from accessing a current network.

In a possible design, the second information is carried in at least one of a first field, a second field, and a third field. The first field indicates that access, to the network device, of the first-type terminal device and the second-type terminal device that each support one antenna is barred or allowed, the second field indicates that access, to the network device, of the first-type terminal device and the second-type terminal device that each support two antennas is barred or allowed, and the third field indicates that access, to the network device, of the first-type terminal device and the second-type terminal device that support half-duplex frequency division multiplexing is barred or allowed.

In a possible design, accessing or being barred from accessing the network device based on the first information and the second information may include: when the terminal device is the first-type terminal device that supports one antenna, accessing or being barred from accessing the network device based on the first information and the first field; or when the terminal device is the first-type terminal device that supports two antennas, accessing or being barred from accessing the network device based on the first information and the second field; or when the terminal device is the first-type terminal device that supports half-duplex frequency division multiplexing, accessing or being barred from accessing the network device based on the first information and the third field. According to this design, only the first information is added for the capabilities and supported communication channels that are of the first-type terminal devices, so that different methods for the first-type terminal devices accessing or being barred from accessing the network device are implemented, thereby reducing information overheads.

In a possible design, the capability of the first-type terminal device includes a first capability or a second capability. The first information includes first sub-information and second sub-information, the first sub-information indicates that access of the first-type terminal device having the first capability to the network device is barred or allowed, and the first sub-information and the second sub-information indicate that access of the first-type terminal device having the second capability to the network device is barred or allowed.

In a possible design, accessing or being barred from accessing the network device based on the first information may include: When the terminal device is the first-type terminal device having the first capability, and the first sub-information indicates that the access of the first-type terminal device is allowed, the terminal device can access the network device. Alternatively, when the terminal device is the first-type terminal device having the first capability, and the first sub-information indicates that the access of the first-type terminal device is barred, the access of the terminal device to the network device is barred. Alternatively, when the terminal device is the first-type terminal device having the second capability, the first sub-information indicates that the access of the first-type terminal device to the network device is allowed, and the second sub-information indicates that the access of the first-type terminal device having the second capability is allowed, the terminal device accesses the network device. Alternatively, when the terminal device is the first-type terminal device having the second capability, and the first sub-information indicates that the access of the first-type terminal device is barred, or the second sub-information indicates that the access of the first-type terminal device having the second capability is barred, the access of the terminal device to the network device is barred. According to this design, different methods for accessing or barring access to the network device are designed for first-type terminal devices having different capabilities, so that diversity of determining, by the first-type terminal devices, whether to access the network device can be effectively improved.

In a possible design, the capability of the first-type terminal device includes a first capability or a second capability. The first information includes third sub-information and fourth sub-information, the third sub-information indicates that access of the first-type terminal device having the first capability is barred or allowed, and the fourth sub-information indicates that access of the first-type terminal device having the second capability is barred or allowed.

In a possible design, accessing or being barred from accessing the network device based on the first information may include: when the terminal device is the first-type terminal device having the first capability, and the third sub-information indicates that the access of the first-type terminal device having the first capability is allowed, accessing the network device; or when the terminal device is the first-type terminal device having the second capability, and the fourth sub-information indicates that the access of the first-type terminal device having the second capability is allowed, accessing the network device; or when the terminal device is the first-type terminal device having the first capability, and the third sub-information indicates that the access of the first-type terminal device having the first capability is barred, being barred from accessing the network device; or when the terminal device is the first-type terminal device having the second capability, and the fourth sub-information indicates that the access of the first-type terminal device having the second capability is barred, being barred from accessing the network device. According to this design, different methods for the first-type terminal devices accessing or being barred from accessing the network device are designed for the capabilities of the first-type terminal devices, so that the diversity of determining, by the first-type terminal devices, whether to access the network device can be effectively improved.

In a possible design, the method further includes: sending first capability information or second capability information to the network device. The first capability information indicates the first capability, and the second capability information indicates the second capability.

In a possible design, the first capability information or the second capability information is indicated through any one of the following messages: a message 1 in a random access process, a message A in a random access process, a message 3 in a random access process, and radio resource control RRC signaling.

In a possible design, the first capability information is a first logical channel identifier corresponding to the first capability, and the second capability information is a second logical channel identifier corresponding to the second capability.

In a possible design, a value of the first logical channel identifier is one of 37 to 42; and a value of the second logical channel identifier is one of 37 to 42, and the first logical channel identifier is different from the second logical channel identifier.

In a possible design, the method further includes: receiving first indication information or second indication information from the network device. The first indication information indicates to report the first capability information, and the second indication information indicates to report the second capability information.

In a possible design, the first-type terminal device is eRedCap UE, and the second-type terminal device is RedCap UE.

According to a second aspect, this application provides an access method. The method is performed by a network device or a module or a chip in the network device. An example in which the method is performed by the network device is used for description herein. The method includes: generating first information, where the first information indicates that access of a first-type terminal device is barred or allowed, a baseband processing bandwidth of the first-type terminal device is less than a maximum transmission bandwidth, a peak data transmission rate of the first-type terminal device is less than a peak data transmission rate of a second-type terminal device, a baseband processing bandwidth of the second-type terminal device is equal to a maximum transmission bandwidth, or the first-type terminal device meets a first condition; and sending the first information.

With reference to the first aspect, the first information is barring or not barring access, to a network, of a first-type terminal device that supports a peak data rate of a first value.

Alternatively, in an example, the first value may be a value less than or equal to 10 Mbps. For example, the first value is 10 Mbps.

In another example, the first value may be a value less than or equal to 6 Mbps. For example, the first value is 6 Mbps.

With reference to the first aspect, the first information is barring or not barring the access, to the network, of the first-type terminal device that supports the peak data rate of the first value. The first value is related to a product of a layer number, a modulation order, and a scaling factor.

The layer number may be specified by a higher layer parameter. For example, the layer number may be a maximum supported layer number specified by higher layer parameters: maxNumberMIMO-LayersPDSCH, maxNumberMIMO-LayersCB-PUSCH, and maxNumberMIMO-LayersNonCB-PUSCH.

The modulation order may be specified by a higher layer parameter. For example, the modulation order may be a maximum supported modulation order specified by higher layer parameters: supportedModulationOrderDL and supportedModulationOrderUL supportedModulationOrderUL.

The scaling factor may be specified by a higher layer parameter. For example, the scaling factor may be a scaling factor specified by higher layer parameters: scalingFactor and scalingFactor-1024QAM-FR1.

In an example, a minimum value of a product of the layer number, the modulation order, and the scaling factor is not greater than 3.2, and the first value is 10 Mbps. For example, the minimum value of the product of the layer number, the modulation order, and the scaling factor is 3 or 3.2, and the first value is 10 Mbps.

In another example, a minimum value of a product of the layer number, the modulation order, and the scaling factor is not greater than 1.92, and the first value is 6 Mbps. For example, the minimum value of the product of the layer number, the modulation order, and the scaling factor is 1 or 1.92, and the first value is 6 Mbps.

With reference to the first aspect, the first information is barring or not barring access, to the network, of a first-type terminal device meeting that the product of the layer number, the modulation order, and the scaling factor is greater than or equal to a second value.

In a possible implementation, a value of the second value is less than 4.

In an example, the value of the second value is not greater than 3.2, and a corresponding peak data rate is 10 Mbps. For example, the value of the second value is 3 or 3.2.

In another example, the value of the second value is not greater than 1.92, and a corresponding peak data rate is 6 Mbps. For example, the value of the second value is 1 or 1.92.

In another possible implementation, the second value may be a smaller value in a plurality of second values supported by a plurality of first-type terminal devices. For example, a first type of first-type terminal device supports a maximum baseband processing bandwidth of 20 MHz, a corresponding second value is K1, and K1 may be 1 or another value less than 3. A second type of first-type terminal device supports a maximum baseband processing bandwidth of 5 MHz, a corresponding second value is K2, and K2 may be 3.2 or another value greater than or equal to 3 and less than 4. In this case, the second value may be a smaller value in K1 and K2.

The plurality of first-type terminal devices may alternatively be understood as a plurality of first-type terminal devices that belong to a same type and have different capabilities.

In a possible design, the first condition may include at least one of the following: A radio frequency bandwidth of the first-type terminal device exceeds the maximum baseband processing bandwidth; or the maximum transmission bandwidth supported by the first-type terminal device exceeds the maximum baseband processing bandwidth; or a maximum scheduling bandwidth supported by the first-type terminal device exceeds the maximum baseband processing bandwidth; or the maximum bandwidth supported by the first-type terminal device is greater than 5 MHz, for example, is 20 MHz; or a maximum bandwidth that is supported by the first-type terminal device and that can be used for sending in a single slot or a single frequency hop is 5 MHz; or a maximum bandwidth that is supported by the first-type terminal device and that can be processed in a single slot is 5 MHz.

Alternatively, the baseband processing bandwidth of the first-type terminal device may be replaced with the maximum baseband processing bandwidth, the maximum baseband processing bandwidth, a maximum baseband bandwidth, the maximum baseband bandwidth, a maximum bandwidth, a baseband bandwidth, a maximum bandwidth that is of a terminal apparatus and that can be used for sending in a single slot or a single frequency hop, or a maximum bandwidth that can be processed in a single slot of the terminal apparatus.

The scheduling bandwidth may be alternatively replaced with a scheduled transmission bandwidth, a scheduled downlink channel transmission bandwidth, or a scheduled uplink channel transmission bandwidth.

In a possible implementation, that the maximum bandwidth is 5 MHz may be replaced with the following: When a subcarrier spacing is 15 kHz, the maximum bandwidth is 25 RBs; or when the subcarrier spacing is 30 kHz, the maximum bandwidth is 12 RBs.

In a possible implementation, that the maximum bandwidth that is supported by the first-type terminal device and that can be used for sending in the single slot or the single frequency hop is 5 MHz includes: When the first-type terminal device sends the physical uplink shared channel PUSCH, the maximum bandwidth that is supported by the first-type terminal device and that can be used for sending in the single slot or the single frequency hop is 5 MHz.

In a possible implementation, that the maximum bandwidth that is supported by the first-type terminal device and that can be processed in the single slot is 5 MHz includes: When the first-type terminal device sends the physical uplink shared channel PDSCH, the maximum bandwidth that is supported by the first-type terminal device and that can be processed in the single slot is 5 MHz.

In a possible design, the first condition may further include: The first-type terminal device supports the peak data rate of the first value; or the first-type terminal device supports the product of the layer number, the modulation order, and the scaling factor being greater than or equal to the second value.

In a possible design, the first condition may further include: The first-type terminal device operates in frequency range 1 FR1.

In a possible design, the method further includes: sending second information. The second information indicates that access of the second-type terminal device to the network device is barred or allowed, and the second-type terminal device meets a second condition.

In a possible design, the second condition may include at least one of the following: A maximum bandwidth supported by the second-type terminal device in frequency range 1 FR1 is 20 MHz, and a maximum bandwidth supported in frequency range 2 FR2 is 100 MHz; a maximum DRB number that is mandatory to be supported by the second-type terminal device is 8; a PDCP SN size that is mandatory to be supported by the second-type terminal device is 12, and a PDCP SN size that is optional to be supported is 18; an RLC AM SN size that is mandatory to be supported by the second-type terminal device is 12, and an RLC AM SN size that is optional to be supported is 18; when operating in frequency range 1 FR1, a second-type terminal device that supports one receive antenna supports one downlink MIMO layer, and a second-type terminal device that supports two receive antennas supports two downlink MIMO layers; when operating in frequency range 2 FR2, the second-type terminal device always supports two receive antennas and one or two downlink MIMO layers; and the second-type terminal device does not support features or capabilities associated with CA, MR-DC, DAPS, CPAC, and IAB.

In a possible design, the first information is included in system information block 1, or the first information and the second information are included in system information block 1.

In a possible design, the method further includes: The terminal device accesses or is barred from accessing the network device based on an IntraFreqReselection field included in system information block 1. Alternatively, the method further includes: System information block 1 includes a first IntraFreqReselection field, and the first IntraFreqReselection field indicates that the access of the first-type terminal device and the second-type terminal device to the network device is barred or allowed; or system information block 1 includes the first IntraFreqReselection field and a second IntraFreqReselection field, the first IntraFreqReselection field indicates that the access of the first-type terminal device to the network device is barred or allowed, and the second IntraFreqReselection field indicates that the access of the second-type terminal device to the network device is barred or allowed.

In a possible design, the second information is carried in at least one of a first field, a second field, and a third field. The first field indicates that access of the first-type terminal device and the second-type terminal device that each support one antenna is barred or allowed, the second field indicates that access of the first-type terminal device and the second-type terminal device that each support two antennas is barred or allowed, and the third field indicates that access of the first-type terminal device and the second-type terminal device that support half-duplex frequency division multiplexing is barred or allowed.

In a possible design, the capability of the first-type terminal device includes a first capability or a second capability. The first information includes first sub-information and second sub-information, the first sub-information indicates that access of the first-type terminal device having the first capability to the network device is barred or allowed, and the first sub-information and the second sub-information indicate that access of the first-type terminal device having the second capability to the network device is barred or allowed.

In a possible design, the capability of the first-type terminal device includes a first capability or a second capability. The first information includes third sub-information and fourth sub-information, the third sub-information indicates that access of the first-type terminal device having the first capability is barred or allowed, and the fourth sub-information indicates that access of the first-type terminal device having the second capability is barred or allowed.

In a possible design, the method further includes: receiving the first capability information or the second capability information from the terminal device. The first capability information indicates the first capability, and the first capability information indicates the second capability.

In a possible design, the first capability information or the second capability information is indicated through any one of the following messages: a message 1 in a random access process, a message A in a random access process, a message 3 in a random access process, and radio resource control RRC signaling.

In a possible design, the first capability information is a first logical channel identifier corresponding to the first capability, and the second capability information is a second logical channel identifier corresponding to the second capability.

In a possible design, a value of the first logical channel identifier is one of 37 to 42; and a value of the second logical channel identifier is one of 37 to 42, and the first logical channel identifier is different from the second logical channel identifier.

In a possible design, the method further includes: sending first indication information or second indication information. The first indication information indicates to report the first capability information, and the second indication information indicates to report the second capability information.

According to a third aspect, this application further provides a communication apparatus, and the communication apparatus can implement any method according to the first aspect or the second aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus to perform a corresponding function performed by the terminal device, the first network device, or the second network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal apparatus.

In a possible design, the communication apparatus includes corresponding functional modules separately configured to implement the steps in the foregoing methods. The functions may be implemented by hardware, or may be implemented by hardware executing corresponding software. The hardware or software includes one or more modules corresponding to the foregoing functions.

In a possible design, a structure of the communication apparatus includes a processing unit, a sending unit, and a receiving unit. These units may perform corresponding functions in the foregoing method examples. For details, refer to descriptions in the method according to any one of the first aspect to the fifth aspect. Details are not described herein.

According to a fourth aspect, an embodiment of this application further provides a communication apparatus. The communication apparatus includes a module/unit for performing any method according to any one of the first aspect and the second aspect. These modules/units may be implemented by hardware, or may be implemented by executing corresponding software by hardware.

According to a fifth aspect, an embodiment of this application provides a communication apparatus, including a memory and a processor. The processor is configured to execute a computer program or instructions stored in the memory, and the communication apparatus is enabled to implement any method according to any one of the first aspect and the second aspect.

According to a sixth aspect, an embodiment of this application further provides a computer-readable storage medium. The computer-readable storage medium includes a computer program. When the computer program is run on a communication apparatus, the computer-readable storage medium is enabled to implement any method according to any one of the first aspect and the second aspect.

According to a seventh aspect, an embodiment of this application further provides a computer program product. When the computer program product runs on a communication apparatus, the communication apparatus is enabled to implement the method according to any one of the first aspect and the second aspect, and the possible designs of the first aspect and the second aspect.

According to an eighth aspect, a chip is provided. The chip includes a processor, further includes a memory, and is configured to implement the method according to any one of the first aspect and the second aspect, and the possible implementations of any one of the aspects. The chip may include a chip, or may include a chip and another discrete component.

According to a ninth aspect, a communication system is provided, including a terminal device and a network device.

The terminal device is configured to implement the method according to any one of the first aspect and the possible implementations of the first aspect. The network device is configured to implement the method according to any one of the second aspect and the possible implementations of the second aspect.

These or other aspects of this application are more concise and easier to understand in description of the following embodiments.

### BRIEF DESCRIPTION OF DRAWINGS

FIG. 1 is a diagram of a mobile communication system applicable to an embodiment of this application;
FIG. 2 is a schematic flowchart of an access method according to an embodiment of this application;
FIG. 3 is a schematic flowchart of an access method according to an embodiment of this application;
FIG. 4 is a diagram of a structure of a communication apparatus according to an embodiment of this application; and
FIG. 5 is a diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not indicate a specific order or sequence.

A communication method provided in embodiments of this application may be applied to various mobile communication systems, for example, internet of things (internet of things, IoT), narrowband internet of things narrowband internet of things, NB-IoT), long term evolution (long term evolution, LTE), a 5th generation (5th generation, 5G) communication system (for example, 5G new radio (new radio, NR)), a hybrid architecture of LTE and 5G, or a new communication system emerging in 6G or future communication development. Alternatively, the communication system may be a machine to machine (machine to machine, M2M) network, a machine type communication (machine type communication, MTC) network, or another network.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

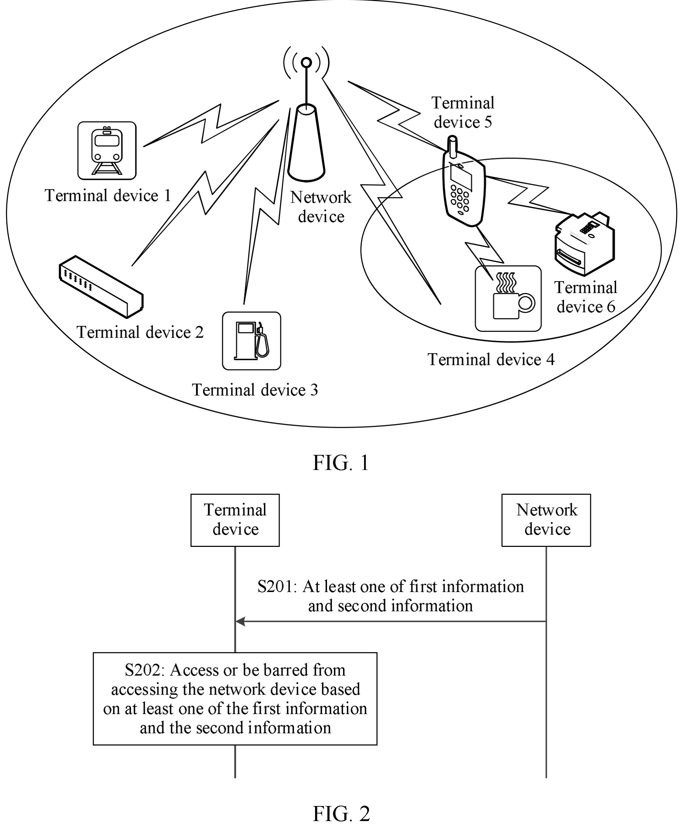

For ease of understanding embodiments of this application, a communication system shown in FIG. 1 is first used as an example to describe in detail a communication system applicable to embodiments of this application. FIG. 1 is a diagram of a communication system applicable to a communication method according to an embodiment of this application. As shown in FIG. 1, a communication system includes a network device and a terminal device 1 to a terminal device 6. In the communication system, the terminal device 1 to the terminal device 6 may send uplink data to the network device, and the network device may send downlink data to the terminal device 1 to the terminal device 6. In addition, a communication system may alternatively include the terminal device 4 to the terminal device 6. In this case, in the communication system, the network device may send downlink data of the terminal device 4 and the terminal device 6 to the terminal device 5, and then the terminal device 5 forwards the downlink data to the terminal device 4 and the terminal device 6.

In this embodiment of this application, the network device may be an access network device in a wireless network. For example, the network device may be a radio access network (radio access network, RAN) node that connects the terminal device to the wireless network, and may also be referred to as an access network device. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB) a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a network device in a 5G mobile communication system, for example, may be a next generation NodeB (next generation NodeB, gNB), a transmission reception point (transmission reception point, TRP), or a TP in an NR system; or may be one antenna panel or a group of antenna panels (including a plurality of antenna panels) of a base station in the 5G mobile communication system. Alternatively, the network device may be a network node, for example, a BBU or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, to implement functions of a radio resource control (radio resource control, RRC) layer. The DU is responsible for processing a physical layer protocol and a real-time service, and implementing functions of a radio link control (radio link control, RLC) layer, a media access control (media access control, MAC) layer, and a physical (physical, PHY) layer.

The terminal device in embodiments of this application may be a wireless terminal apparatus that can receive scheduling and indication information from the network device. The terminal device may also be referred to as user equipment (user equipment, UE), a mobile station (mobile station, MS), a mobile terminal (mobile terminal, MT), or the like. Examples of some terminal devices are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, an intelligent vehicle, a telematics box (or referred to as a vehicle-mounted sending unit) (telematics box, T-box), a machine-to-machine/machine-type communications (machine-to-machine/machine-type communications, M2M/MTC) terminal apparatus, an internet of things (internet of things, IoT) terminal apparatus, and the like.

In embodiments of this application, an apparatus configured to implement a function of the terminal device may be the terminal device, or may be an apparatus that can support the terminal device to implement the function, for example, a chip system, where the apparatus may be mounted in the terminal device. In the technical solutions provided in embodiments of this application, the technical solutions provided in embodiments of this application are described by using an example in which the apparatus configured to implement the function of the terminal device is the terminal device.

In embodiments of this application, there may be a plurality of types of terminal devices. For example, the types of the terminal devices may include a legacy (legacy) terminal device, a reduced capability (reduced capability, RedCap) terminal device, an enhanced RedCap (enhanced RedCap, eRedCap) terminal device, and the like. The legacy terminal device may be an NR release 15 (Rel-15) terminal device, or may be an NR Rel-16 terminal device. This is not limited herein.

In this application, the RedCap terminal device may also be referred to as a first-type terminal device, and the eRedCap terminal device may also be referred to as a second-type terminal device.

In comparison with a legacy terminal device, the second-type terminal device is a type of terminal device with a low transmission capability or low costs. The second-type terminal device may be an NR RedCap terminal device. For example, the NR RedCap terminal device may be an NR Rel-17 terminal device, or may be an NR Rel-18 terminal device. This is not limited herein.

In this application, the second-type terminal device may meet a second condition, and the second condition may include at least one of the following:
1. When the second-type terminal device performs data transmission with the network device, the second-type terminal device may simultaneously use different frequency resources such as 20 MHz, 10 MHz, or 5 MHz on one carrier at most.
2. An antenna configuration supported by the second-type terminal device may be 2T1R, or an antenna configuration supported by the second-type terminal device may be 2T2R.
3. The second-type terminal device supports only half-duplex frequency division duplexing (half-duplex frequency division duplexing, hd fdd).
4. A peak data transmission rate of the second-type terminal device is less than a peak data transmission rate of a legacy terminal device. The peak data transmission rate may correspond to uplink data transmission, or may correspond to downlink data transmission. The peak data transmission rate of the second-type terminal device is greater than or equal to 80 Mbps.
5. A baseband processing bandwidth of the second-type terminal device is equal to a maximum transmission bandwidth.
6. A maximum bandwidth supported by the second-type terminal device in frequency range 1 FR1 is 20 MHz, and a maximum bandwidth supported by the second-type terminal device in frequency range 2 FR2 is 100 MHz.
7. A maximum DRB number that is mandatory to be supported by the second-type terminal device is 8.
8. A PDCP SN size that is mandatory to be supported by the second-type terminal device is 12, and a PDCP SN size that is optional to be supported by the second-type terminal device is 18.
9. An RLC AM SN size that is mandatory to be supported by the second-type terminal device is 12, and an RLC AM SN size that is optional to be supported by the second-type terminal device is 18.
10. When operating in frequency range 1 FR1, a second-type terminal device that supports one receive antenna supports one downlink MIMO layer, and a second-type terminal device that supports two receive antennas supports two downlink MIMO layers.
11. When operating in frequency range 2 FR2, a second-type terminal device always supports two receive antennas and one or two downlink MIMO layers, and the second-type terminal device does not support features or capabilities associated with CA, MR-DC, DAPS, CPAC, and IAB.

The foregoing is merely an example. The second-type terminal device may further have other features, and examples are not enumerated herein.

In embodiments of this application, second-type terminal devices may be classified into a second-type terminal device that supports one antenna, a second-type terminal device that supports two antennas, and a second-type terminal device that supports half-duplex frequency division multiplexing.

In this application, the first-type terminal device may meet a first condition, and the first condition may include at least one of the following:
1. A radio frequency bandwidth of the first-type terminal device exceeds a maximum baseband processing bandwidth.
2. A maximum transmission bandwidth supported by the first-type terminal device exceeds the maximum baseband processing bandwidth.
3. A maximum scheduling bandwidth supported by the first-type terminal device exceeds the maximum baseband processing bandwidth.
4. The first-type terminal device supports a peak data rate of a first value, where a value of the first value may be 10 Mbps or 6 Mbps, and the first condition may further include that the first-type terminal device operates in FR1.

The first-type terminal device may have a first capability or a second capability. The first capability and the second capability may be defined in different manners.

In a first definition, for a first-type terminal device having the first capability, in a possible implementation, a peak data transmission rate of the first-type terminal device is the first value, or a product of a layer number, a modulation order, and a scaling factor is greater than or equal to a third value. For example, when the first-type terminal device may have the first capability, the peak data transmission rate of the first-type terminal device is 10 Mbps, or the product of the layer number, the modulation order, and the scaling factor is greater than or equal to 1.

Optionally, the first value is related to the product of the layer number, the modulation order, and the scaling factor.

Optionally, the third value is a number greater than 0 and less than 3.

For a first-type terminal device having the second capability, in a possible implementation, a baseband processing bandwidth of the first-type terminal device is less than a maximum transmission bandwidth. Alternatively, the baseband processing bandwidth of the first-type terminal device is less than or equal to a preset value, a radio frequency bandwidth, or a maximum scheduling bandwidth. The preset value may be greater than or equal to 5 MHz. For example, the preset value is 5 MHz or an RB number corresponding to a different subcarrier. RB numbers corresponding to different subcarriers include an RB number of 25 corresponding to a subcarrier spacing of 15 kHz; and an RB number of 12 corresponding to a subcarrier spacing of 30 kHz. For example, when the first-type terminal device may have the second capability, the maximum transmission bandwidth of the first-type terminal device is 20 MHz, and the baseband processing bandwidth on which an uplink data channel (PDSCH) and a downlink data channel (PUSCH) are sent or processed supports 5 MHz.

In a second definition manner, for a first-type terminal device having the first capability, a baseband processing bandwidth of the first-type terminal device is less than or equal to a maximum transmission bandwidth. Alternatively, the baseband processing bandwidth of the first-type terminal device is less than or equal to a preset value, a radio frequency bandwidth, or a maximum scheduling bandwidth. The preset value may be greater than or equal to 5 MHz. For example, the preset value is 20 MHz or an RB number corresponding to a different subcarrier. RB numbers corresponding to different subcarriers include an RB number of 106 corresponding to a subcarrier spacing of 15 kHz; and an RB number of 51 corresponding to a subcarrier spacing of 30 kHz.

A peak data transmission rate of the first-type terminal device is the first value, or a product of a layer number, a modulation order, and a scaling factor is greater than or equal to a third value. For example, when the first-type terminal device may have the first capability, both the maximum transmission bandwidth and the baseband processing bandwidth of the first-type terminal device are 20 MHz; and the peak data transmission rate of the first-type terminal device is 10 Mbps, or the product of the layer number, the modulation order, and the scaling factor is greater than or equal to 1.

Optionally, the first value is related to the product of the layer number, the modulation order, and the scaling factor.

Optionally, the third value is a number greater than 0 and less than 3.

In embodiments of this application, the baseband processing bandwidth may also be referred to as the maximum baseband processing bandwidth, the maximum baseband processing bandwidth, a maximum baseband bandwidth, the maximum baseband bandwidth, a maximum bandwidth, a baseband bandwidth, a maximum baseband processing capability, the maximum baseband processing capability, a maximum baseband capability, the maximum baseband capability, a maximum capability, a baseband capability, or the like. This is not limited herein.

The maximum transmission bandwidth may also be referred to as the maximum transmission bandwidth, the radio frequency bandwidth, the maximum scheduling bandwidth, or the like. This is not limited herein.

For a first-type terminal device having the second capability, in a possible implementation, a baseband processing bandwidth of the first-type terminal device is less than a maximum transmission bandwidth, and a peak data transmission rate of the first-type terminal device is less than the peak data transmission rate of the second-type terminal device. Alternatively, the baseband processing bandwidth of the first-type terminal device is less than or equal to a preset value, a radio frequency bandwidth, or a maximum scheduling bandwidth. The preset value may be greater than or equal to 5 MHz. For example, the preset value is 5 MHz or an RB number corresponding to a different subcarrier. RB numbers corresponding to different subcarriers include an RB number of 106 corresponding to a subcarrier spacing of 15 kHz; and an RB number of 51 corresponding to a subcarrier spacing of 30 kHz. For example, when the first-type terminal device may have the second capability, the maximum transmission bandwidth of the first-type terminal device is 20 MHz, and the baseband processing bandwidth on which an uplink data channel (PDSCH) and a downlink data channel (PUSCH) are sent or processed supports 5 MHz. In addition, a peak data transmission rate of the first-type terminal device is limited to 10 Mbps, or a product of a layer number, a modulation order, and a scaling factor is greater than or equal to 1 or 3.2.

In another possible implementation, the baseband processing bandwidth of the first-type terminal device having the second capability may be any one of 5 MHz, 20 MHz, 40 MHz, 80 MHz, 10 MHz, or the like, and the baseband processing bandwidth may further support X MHz, where X>20. For example, X may be 40, 80, 100, or the like. The peak data transmission rate of the first-type terminal device is less than the peak data transmission rate of the second-type terminal device.

In embodiments of this application, first-type terminal devices may be further classified into a first-type terminal device that supports one antenna, a first-type terminal device that supports two antennas, and a first-type terminal device that supports half-duplex frequency division multiplexing.

The foregoing is merely an example. The first-type terminal device may further have other features, and examples are not described herein one by one.

It can be learned from the foregoing descriptions that there are a plurality of types of terminal devices in a mobile communication network. Therefore, this application provides a method and an apparatus, to perform access control on different types of terminal devices.

A network architecture and a service scenario described in embodiments of this application are intended to describe the technical solutions in embodiments of this application more clearly, and do not constitute a limitation on the technical solutions according to embodiments of this application. A person of ordinary skill in the art may know that with evolution of a network architecture and emergence of a new service scenario, the technical solutions according to embodiments of this application are also applicable to similar technical problems.

In embodiments of this application, an NR network scenario in a wireless communication network is used as an example to describe some scenarios. It should be noted that the solutions in embodiments of this application may further be applied to another wireless communication network, and a corresponding name may also be replaced with a name of a corresponding function in the another wireless communication network.

FIG. 2 is a schematic flowchart of an access method according to an embodiment of this application. When the method procedure is applied to the system shown in FIG. 1, the network device or the module or the chip in the network device in FIG. 1 may perform the method performed by the network device in the following procedure, and the terminal device or the module or the chip in the terminal device in FIG. 1 may perform the method performed by the terminal device in the following procedure. It may be understood that a specific structure of an execution body of the method provided in embodiments of this application is not particularly limited in the following embodiments, provided that a program that records code of the method provided in embodiments of this application can be run to perform access according to the method provided in embodiments of this application. For example, the execution body may be a terminal device or a functional module that can invoke and execute a program in the terminal device, or may be a network device or a functional module that can invoke and execute a program in the network device. The following uses only the terminal device or the network device as an example for description.

S201: The network device sends at least one of first information and second information to the terminal device.

In this embodiment of this application, when the terminal device is a first-type terminal device, the terminal device meets a first condition; or when the terminal device is a second-type terminal device, the terminal device meets a second condition. The first condition and the second condition are described above. Details are not described below.

Correspondingly, the terminal device receives at least one of the first information and the second information.

The first information and the second information may be carried in a same message, or may be carried in different messages. For example, the network device may add the first information and the second information to system information block (system information block, SIB) 1.

In a possible implementation, the first information indicates that access of the first-type terminal device is barred or allowed. The second information indicates that access of the second-type terminal device is barred or allowed.

Herein, "access of the first-type terminal device is barred or allowed" may be replaced with descriptions similar to "access of the first-type terminal device to the network device is barred or allowed", "access of the first-type terminal device to a cell of the network device is barred or allowed", "whether access of the first-type terminal device is allowed", or "whether access of the first-type terminal device is barred". Details are not described herein again.

S202: The terminal device accesses or is barred from accessing the network device based on at least one of the first information and the second information.

In this application, that the access of the terminal device to the network device is barred may mean that the terminal device does not or cannot access the network device because the network device bars the access of the terminal device.

There may be a plurality of implementations of how the terminal device specifically accesses or is specifically barred from accessing the network device. The following describes the implementations in detail.

In a first possible implementation, the terminal device accesses or is barred from accessing the network device based on the first information.

In this implementation, the terminal device can determine, based on only the first information, whether the terminal device can access or is barred from accessing the network device. How the first information specifically indicates that the access of the terminal device is barred or allowed, that is, how the terminal device determines, based on the first information, to access or be barred from accessing the network device may include one or more of the following possible implementations.

Implementation 1: The first information may directly indicate that the access of the first-type terminal device to the network device is barred or allowed, and the terminal device may directly access or be barred from accessing the network device based on the first information.

In Implementation 1, the first information may be carried in a first indication field. For example, the first indication field may be located in system information block 1. The first indication field may be referred to as a cellBarredeRedCap (cellBarredeRedCap) field, or may be referred to as a cellBarredRedCapPR1 (cellBarredRedCapPR1) field, or may be referred to as a cellBarredRedCapBW3/PR3 (cellBarredRedCapBW3/PR3) field, or the like. A specific name of the first indication field is not limited in this application.

In Implementation 1, in an implementation, the first information may indicate, based on different values, that the access to the network device is barred or allowed.

For example, the first information may be barred (barred) or allowed (notbarred). When the first information is barred, it indicates that the access of the first-type terminal device to the network device is barred. When the first information is notbarred, it indicates that the access of the first-type terminal device to the network device is allowed.

Correspondingly, if the terminal device is the first-type terminal device, and the first information indicates that the access of the first-type terminal device to the network device is barred, for example, the first information is barred, the terminal device may be barred from accessing the network device. If the first information indicates that the access of the first-type terminal device is allowed, for example, the first information is notbarred, the terminal device may access the network device.

Implementation 1, in another implementation, if the first information is present in SIB1, for example, the first information is true, it may indicate that the access of the first-type terminal device to the network device is allowed.

If there is no first information in SIB 1, it may indicate that the access of the first-type terminal device to the network device is barred.

If the first information is carried in the first indication field, whether the first information is present in SIB1 may also be understood as whether the first indication field is present in SIB1.

For example, absence of the first information in SIB1 may indicate that the access of the first-type terminal device to the network device is barred. Presence of the first information in SIB1 may indicate that the access of the first-type terminal device to the network device is allowed.

Correspondingly, if the terminal device is the first-type terminal device, and the first information is present in SIB1 received by the terminal device, the terminal device may access the network device; or no first information is present in SIB1 received by the terminal device, the terminal device may be barred from accessing the network device.

In Implementation 1, when the terminal device is the first-type terminal device, the terminal device may have a first capability or a second capability. This is not limited in this application.

According to the foregoing method, the first-type terminal device accesses or is barred from accessing the network device based on only the first information, so that the first-type terminal device can conveniently and efficiently access or be barred from accessing the network device.

Implementation 2: The first information includes first sub-information and/or second sub-information, and the terminal device may access or be barred from accessing the network device based on the first sub-information and/or the second sub-information.

The first sub-information indicates that access of a first-type terminal device having a first capability to the network device is barred or allowed, and the first sub-information and the second sub-information indicate that access of a first-type terminal device having a second capability to the network device is barred or allowed. The first capability herein is a first capability defined in a first definition manner, and the second capability herein is a second capability defined in the first definition manner.

In Implementation 2, the first sub-information may be carried in a second indication field, and the second indication field may be located in system information block 1. The second indication field may be referred to as a cellBarredRedCapPR1 (cellBarredRedCapPR1) field or the like. A specific name of the second indication field is not limited in this application.

The second sub-information may be carried in a third indication field, and the third indication field may be located in system information block 1. The third indication field may be referred to as a cellBarredRedCapBW3/PR3 (cellBarredRedCapBW3/PR3) field or the like. A specific name of the third indication field is not limited in this application.

In Implementation 2, in an implementation, the first sub-information may indicate, based on different values, that the access of the first-type terminal device having the first capability to the network device is barred or allowed, and the first sub-information and the second sub-information may indicate, based on different values, that the access of the first-type terminal device having the second capability to the network device is barred or allowed.

For example, the first sub-information may be barred or notbarred. When the first sub-information is barred, it indicates that the access of the first-type terminal device having the first capability to the network device is barred. When the first sub-information is notbarred, it indicates that the access of the first-type terminal device having the first capability to the network device is allowed.

The second sub-information may be barred or notbarred. When either the first sub-information or the second sub-information is barred, it indicates that the access of the first-type terminal device having the second capability to the network device is barred. When both first sub-information and the second sub-information are notbarred, it indicates that the access of the first-type terminal device having the second capability to the network device is allowed.

Correspondingly, if the terminal device is the first-type terminal device having the first capability, and the first sub-information indicates that the access of the first-type terminal device having the first capability to the network device is barred, for example, the first sub-information is barred, the terminal device may be barred from accessing the network device. The first sub-information indicates that the access of the first-type terminal device having the first capability to the network device is allowed, for example, the first sub-information is notbarred, and the terminal device may access the network device.

If the terminal device is the first-type terminal device having the second capability, and the first sub-information indicates that the access of the first-type terminal device having the second capability to the network device is barred, for example, the first sub-information is barred, the terminal device may be barred from accessing the network device. In this implementation, regardless of whether the second sub-information indicates that the access of the first-type terminal device is barred or allowed. The first-type terminal device is barred from accessing the network device.

If the terminal device is the first-type terminal device having the second capability, and the first sub-information and the second sub-information indicate that the access of the first-type terminal device having the second capability to the network device is allowed, for example, the first sub-information is notbarred, and the second sub-information is notbarred, the terminal device may access the network device.

In Implementation 2, in another implementation, that the access of the first-type terminal device having the first capability to the network device is barred or allowed may alternatively be indicated based on whether the first sub-information is present in SIB 1, and that the access of the first-type terminal device having the second capability to the network device is barred or allowed is indicated based on whether the first sub-information and the second sub-information are present in SIB 1.

If the first sub-information is carried in the second indication field, whether the first sub-information is present in SIB1 may also be understood as whether the second indication field is present in SIB1. If the second sub-information is carried in the third indication field, whether the second sub-information is present in SIB1 may also be understood as whether the third indication field is present in SIB1.

For example, absence of the first sub-information in SIB1 may indicate that the access of the first-type terminal device having the first capability to the network device is barred. Presence of the first sub-information in SIB1 may indicate that the access of the first-type terminal device having the first capability to the network device is allowed.

Correspondingly, if the terminal device is the first-type terminal device having the first capability, and the first sub-information is present in SIB1 received by the terminal device, the terminal device may access the network device; or no first sub-information is present in SIB1 received by the terminal device, the terminal device may be barred from accessing the network device.

For example, absence of the first sub-information in SIB1 may indicate that the access of the first-type terminal device having the second capability to the network device is barred, regardless of whether the second sub-information is present in SIB1.

Correspondingly, if the terminal device is the first-type terminal device having the second capability, and no first sub-information is present in SIB1 received by the terminal device, the terminal device may be barred from accessing the network device regardless of whether the second sub-information is present in SIB1.

For example, presence of the first sub-information and the second sub-information in SIB1 may indicate that the access of the first-type terminal device having the second capability to the network device is allowed.

Correspondingly, if the terminal device is the first-type terminal device having the second capability, and the first sub-information and the second sub-information are present in SIB1 received by the terminal device, the terminal device may access the network device.

According to the foregoing method, different methods for accessing or barring access to the network device are designed for first-type terminal devices having different capabilities, so that diversity of determining, by the first-type terminal devices, whether to access the network device can be effectively improved.

Implementation 3: The first information includes third sub-information and/or fourth sub-information, and the terminal device may access or be barred from accessing the network device based on the third sub-information and/or the fourth sub-information.

The third sub-information indicates that access of a first-type terminal device having a first capability to the network device is barred or allowed, and the fourth sub-information indicate that access of a first-type terminal device having a second capability to the network device is barred or allowed. The first capability herein is a first capability defined in a second definition manner, and the second capability herein is a second capability defined in the second definition manner.

In Implementation 3, the third sub-information may be carried in a fourth indication field, and the fourth indication field may be located in system information block 1. The fourth indication field may be referred to as a cellBarredRedCapPR1 (cellBarredRedCapPR1) field or the like. A specific name of the fourth indication field is not limited in this application.

The fourth sub-information may be carried in a fifth indication field, and the fifth indication field may be located in system information block 1. The fifth indication field may be referred to as a cellBarredRedCapBW3/PR3 (cellBarredRedCapBW3/PR3) field or the like. A specific name of the fifth indication field is not limited in this application.

In Implementation 3, in an implementation, the third sub-information may indicate that the access of the first-type terminal device having the first capability to the network device is barred or allowed based on different values, and the fourth sub-information may indicate that the access of the first-type terminal device having the second capability to the network device is barred or allowed based on different values.

For example, the third sub-information may be barred or notbarred. When the third sub-information is barred, it indicates that the access of the first-type terminal device having the first capability to the network device is barred. When the third sub-information is notbarred, it indicates that the access of the first-type terminal device having the first capability to the network device is allowed.

Correspondingly, if the terminal device is the first-type terminal device having the first capability, and the third sub-information indicates that the access of the first-type terminal device having the first capability to the network device is barred, for example, the third sub-information is barred, the terminal device may be barred from accessing the network device. The third sub-information indicates that the access of the first-type terminal device having the first capability to the network device is allowed, for example, the third sub-information is notbarred, and the terminal device may access the network device.

For example, the fourth sub-information may be barred or notbarred. When the fourth sub-information is barred, it indicates that the access of the first-type terminal device having the second capability to the network device is barred. When the fourth sub-information is notbarred, it indicates that the access of the first-type terminal device having the second capability to the network device is allowed.

Correspondingly, if the terminal device is the first-type terminal device having the second capability, and the fourth sub-information indicates that the access of the first-type terminal device having the second capability is barred, for example, the fourth sub-information is barred, the terminal device may be barred from accessing the network device. The fourth sub-information indicates that the access of the first-type terminal device having the second capability is allowed, for example, the fourth sub-information is notbarred, and the terminal device may access the network device.

In Implementation 3, in another implementation, that the access of the first-type terminal device having the first capability to the network device is barred or allowed may be indicated based on whether the third sub-information is present in SIB1, and that the access of the first-type terminal device having the second capability to the network device is barred or allowed is indicated based on whether the fourth sub-information is present in SIB1.

If the third sub-information is carried in the fourth indication field, whether the third sub-information is present in SIB1 may also be understood as whether the fourth indication field is present in SIB1. If the fourth sub-information is carried in the fifth indication field, whether the fourth sub-information is present in SIB1 may also be understood as whether the fifth indication field is present in SIB 1.

For example, absence of the third sub-information in SIB1 may indicate that the access of the first-type terminal device having the first capability to the network device is barred. Presence of the third sub-information in SIB1 may indicate that the access of the first-type terminal device having the first capability to the network device is allowed.

Correspondingly, if the terminal device is the first-type terminal device having the first capability, and the third sub-information is present in SIB1 received by the terminal device, the terminal device may access the network device; or no third sub-information is present in SIB 1 received by the terminal device, the terminal device may be barred from accessing the network device.

For example, absence of the fourth sub-information in SIB1 may indicate that the access of the first-type terminal device having the second capability to the network device is barred. Presence of the fourth sub-information in SIB1 may indicate that the access of the first-type terminal device having the second capability to the network device is allowed.

Correspondingly, if the terminal device is the first-type terminal device having the second capability, and the fourth sub-information is present in SIB1 received by the terminal device, the terminal device may access the network device; or no fourth sub-information is present in SIB1 received by the terminal device, the terminal device may be barred from accessing the network device.

According to the foregoing method, different methods for the first-type terminal devices accessing or being barred from accessing the network device are designed for the capabilities of the first-type terminal devices, so that diversity of determining, by the first-type terminal devices, whether to access the network device can be effectively improved.

In a second possible implementation, the terminal device may access or be barred from accessing the network device based on the first information and the second information.

In a first implementation, before the terminal device accesses or is barred from accessing the network device based on the first information and the second information, the terminal device may alternatively access or be barred from accessing the network device based on an IntraFreqReselection (IntraFreqReselection) field. The IntraFreqReselection field, the first information, and the second information may be carried in a same message, or may be carried in different messages. For example, the network device may carry the IntraFreqReselection field, the first information, and the second information in system information block 1. In this implementation, the terminal device may be the first-type terminal device, or may be the second-type terminal device.

In a second implementation, before the terminal device accesses or is barred from accessing the network device based on the first information and the second information, the terminal device may alternatively access or be barred from accessing the network device based on a first IntraFreqReselection field. The first IntraFreqReselection field, the first information, and the second information may be carried in a same message, or may be carried in different messages. For example, the network device may carry the first IntraFreqReselection field, the first information, and the second information in system information block 1. In this implementation, the terminal device may be the first-type terminal device, or may be the second-type terminal device.

In a third implementation, if the terminal device is the first-type terminal device, before the first-type terminal device accesses or is barred from accessing the network device based on the first information and the second information, the terminal device may alternatively access or be barred from accessing the network device based on a first IntraFreqReselection field. The first IntraFreqReselection field, the first information, and the second information may be carried in a same message, or may be carried in different messages. For example, the network device may carry the first IntraFreqReselection field, the first information, and the second information in system information block 1.

If the terminal device is the second-type terminal device, before the second-type terminal device accesses or is barred from accessing the network device based on the first information and the second information, the terminal device may alternatively access or be barred from accessing the network device based on a second IntraFreqReselection field. The second IntraFreqReselection field, the first information, and the second information may be carried in a same message, or may be carried in different messages. For example, the network device may carry the second IntraFreqReselection field, the first information, and the second information in system information block 1.

For example, when the terminal device is the first-type terminal device, the IntraFreqReselection field and the first IntraFreqReselection field have a similar function. The following uses the IntraFreqReselection field as an example for description. The IntraFreqReselection field may be carried in system information block 1. If system information block 1 does not include the IntraFreqReselection field, it indicates that the access of the first-type terminal device is barred or allowed. If the terminal device does not receive the IntraFreqReselection field, or system information block 1 received by the terminal device does not include the IntraFreqReselection field, the terminal device may be barred from accessing the network device. If system information block 1 includes the IntraFreqReselection field, the terminal device accesses or is barred from accessing the network device based on the first information and the second information. In this embodiment of this application, that system information block 1 does not include the IntraFreqReselection field may also be understood as that no IntraFreqReselection field is present in system information block 1.

When the terminal device is the second-type terminal device, functions of the IntraFreqReselection field, the first IntraFreqReselection field, and the second IntraFreqReselection field are similar. The second-type terminal device accesses or is barred from accessing the network device based on the IntraFreqReselection field, the first IntraFreqReselection field, or the second IntraFreqReselection field. For details, refer to descriptions of the first-type terminal device accessing or being barred from accessing the network device based on the IntraFreqReselection field or the first IntraFreqReselection field. Details are not described herein again.

The second information is carried in at least one of a first field, a second field, and a third field. It may be explained that the second information is implemented by setting different values for at least one of the first field, the second field, and the third field. If the first-type terminal device determines, based on the second information, the access to the network device to be barred or allowed, the second information may also indicate that the access of the first-type terminal device to the network device is barred or allowed.

The first field may be referred to as a cellBarredRedCap1Rx (cellBarredRedCap1Rx) field. The first field indicates that access, to the network device, of a first-type terminal device that supports one antenna and a second-type terminal device that supports one antenna is barred or allowed. For example, information carried in the first field may be barred or notbarred. When the information carried in the first field is barred, it indicates that the access, to the network device, of the first-type terminal device that supports one antenna and the second-type terminal device that supports one antenna is barred. When the information carried in the first field is notbarred, it indicates that the access, to the network device, of the first-type terminal device that supports one antenna and the second-type terminal device that supports one antenna is allowed.

The second field may be referred to as a cellBarredRedCap2Rx (cellBarredRedCap2Rx) field. The second field indicates that access, to the network device, of a first-type terminal device that supports two antennas and a second-type terminal device that supports two antennas is barred or allowed. For example, information carried in the second field may be barred or notbarred. When the information carried in the second field is barred, it indicates that the access, to the network device, of the first-type terminal device that supports two antennas and the second-type terminal device that supports two antennas is barred. When the information carried in the second field is notbarred, it indicates that the access, to the network device, of the first-type terminal device that supports two antennas and the second-type terminal device that supports two antennas is allowed.

The third field may be referred to as a halfDuplexRedCapAllowed (halfDuplexRedCapAllowed) field. The third field indicates that access, to the network device, of a first-type terminal device that supports half-duplex frequency division multiplexing and a second-type terminal device that supports half-duplex frequency division multiplexing is barred or allowed. For example, information carried in the third field may be true. If the third field does not exist, it indicates that the access, to the network device, of the first-type terminal device that supports half-duplex frequency division multiplexing and the second-type terminal device that supports half-duplex frequency division multiplexing is barred. When the information carried in the third field is true, it indicates that the access, to the network device, of the first-type terminal device that supports half-duplex frequency division multiplexing and the second-type terminal device that supports half-duplex frequency division multiplexing is allowed.

The foregoing is merely an example, and specific names of the first field, the second field, and the third field are not limited in this application.

In a possible implementation, if the terminal device is the first-type terminal device that supports one antenna, the terminal device may access or be barred from accessing the network device based on the first information and the first field.

For example, the first information indicates that the access of the first-type terminal device to the network device is allowed, and the first field indicates that the access, to the network device, of the first-type terminal device that supports one antenna is allowed. Correspondingly, in this case, if the terminal device is the first-type terminal device that supports one antenna, the terminal device may access the network device.

For details about how the first information indicates that the access of the first-type terminal device to the network device is allowed, or how the terminal device determines, based on the first information, to access the network device, refer to descriptions in any one of Implementation 1 to Implementation 3 in the first possible implementation. Details are not described herein again.

For example, the first information indicates that the access of the first-type terminal device to the network device is barred, and the first field indicates that the access, to the network device, of the first-type terminal device that supports one antenna is barred. Correspondingly, in this case, if the terminal device is the first-type terminal device that supports one antenna, the terminal device may be barred from accessing the network device. In this implementation, the terminal device may first parse the first information. If the first information indicates that the access of the first-type terminal device to the network device is barred, the terminal device may no longer parse the first field. Regardless of whether the first field indicates that the access of the first-type terminal device that supports one antenna is barred or allowed, the first-type terminal device is barred from accessing the network device.

For details about how the first information indicates that the access of the terminal device to the network device is barred, or how the terminal device determines, based on the first information, to be barred from accessing the network device, refer to descriptions in any one of Implementation 1 to Implementation 3 in the first possible implementation. Details are not described herein again.

For example, the first field indicates that the access, to the network device, of the first-type terminal device that supports one antenna is barred, and the first information indicates that the access of the first-type terminal device to the network device is barred. Correspondingly, in this case, if the terminal device is the first-type terminal device that supports one antenna, the terminal device may be barred from accessing the network device. In this implementation, the terminal device may first parse the first field. If the first field indicates that the access of the first-type terminal device to the network device is barred, the terminal device may no longer parse the first information. Regardless of whether the first information indicates that the access of the first-type terminal device is barred or allowed, the first-type terminal device is barred from accessing the network device.

For details about how the first information indicates that the access of the terminal device to the network device is barred or allowed, or how the terminal device determines, based on the first information, to access or be barred from accessing the network device, refer to descriptions in any one of Implementation 1 to Implementation 3 in the first possible implementation. Details are not described herein again.

In a possible implementation, if the terminal device is the first-type terminal device that supports two antennas, the terminal device may access or be barred from accessing the network device based on the first information and the second field.

For example, the first information indicates that the access of the first-type terminal device to the network device is allowed, and the second field indicates that the access, to the network device, of the first-type terminal device that supports two antennas is allowed. Correspondingly, in this case, if the terminal device is the first-type terminal device that supports two antennas, the terminal device may access the network device.

For example, the first information indicates that the access of the first-type terminal device to the network device is barred, and the second field indicates that the access, to the network device, of the first-type terminal device that supports two antennas is barred. Correspondingly, in this case, if the terminal device is the first-type terminal device that supports two antennas, the terminal device may be barred from accessing the network device. In this implementation, the terminal device may first parse the first information. If the first information indicates that the access of the first-type terminal device to the network device is barred, the terminal device may no longer parse the second field.

For example, the second field indicates that the access, to the network device, of the first-type terminal device that supports two antennas is barred, and the first information indicates that the access of the first-type terminal device to the network device is barred. Correspondingly, in this case, if the terminal device is the first-type terminal device that supports two antennas, the terminal device may be barred from accessing the network device. In this implementation, the terminal device may first parse the second field. If the second field indicates that the access of the first-type terminal device to the network device is barred, the terminal device may no longer parse the first information.

For details about how the first information indicates that the access of the terminal device to the network device is barred or allowed, or how the terminal device determines, based on the first information, to access or be barred from accessing the network device, refer to descriptions in any one of Implementation 1 to Implementation 3 in the first possible implementation. Details are not described herein again.

In a possible implementation, if the terminal device is the first-type terminal device that supports half-duplex frequency division multiplexing, the terminal device may access or be barred from accessing the network device based on the first information and the third field.

For example, the first information indicates that the access of the first-type terminal device to the network device is allowed, and the third field indicates that the access, to the network device, of the first-type terminal device that supports half-duplex frequency division multiplexing is allowed. Correspondingly, in this case, if the terminal device is the first-type terminal device that supports half-duplex frequency division multiplexing, the terminal device may access the network device.

For example, the first information indicates that the access of the first-type terminal device to the network device is barred, and the third field indicates that the access, to the network device, of the first-type terminal device that supports half-duplex frequency division multiplexing is barred. Correspondingly, in this case, if the terminal device is the first-type terminal device that supports half-duplex frequency division multiplexing, the terminal device may be barred from accessing the network device. In this implementation, the terminal device may first parse the first information. If the first information indicates that the access of the first-type terminal device to the network device is barred, the terminal device may no longer parse the third field.

For example, the third field indicates that the access, to the network device, of the first-type terminal device that supports half-duplex frequency division multiplexing is barred, and the first information indicates that the access of the first-type terminal device to the network device is barred. Correspondingly, in this case, if the terminal device is the first-type terminal device that supports half-duplex frequency division multiplexing, the terminal device may be barred from accessing the network device. In this implementation, the terminal device may first parse the third field. If the third field indicates that the access of the first-type terminal device to the network device is barred, the terminal device may no longer parse the first information.

For details about how the first information indicates that the access of the terminal device to the network device is barred or allowed, or how the terminal device determines, based on the first information, to access or be barred from accessing the network device, refer to descriptions in any one of Implementation 1 to Implementation 3 in the first possible implementation. Details are not described herein again.

According to the foregoing method, only the first information is added for the capabilities and supported communication channels that are of the first-type terminal devices, so that different methods for the first-type terminal devices accessing or being barred from accessing the network device are implemented, thereby reducing information overheads.

In a third possible implementation, the terminal device may access or be barred from accessing the network device based on the second information.

In an implementation, before accessing or being barred from accessing the network device based on the second information, the terminal device may further access or be barred from accessing the network device based on an IntraFreqReselection field, a first IntraFreqReselection field, or a second IntraFreqReselection field. For details, refer to descriptions in the second possible implementation. Details are not described herein again.

In an implementation, before the terminal device determines, based on the second information, to access or be barred from accessing the network device, the terminal device determines that the first information is not received. For example, the first information is carried in system information block 1. If no first information is present in system information block 1 received by the terminal device, the terminal device accesses or is barred from accessing the network device based on the second information.

In this application, the second information is carried in at least one of a first field, a second field, and a third field.

In a possible implementation, if the terminal device is a first-type terminal device that supports one antenna, the terminal device may access or be barred from accessing the network device based on the first field.

If the terminal device is the first-type terminal device that supports one antenna, and the first field indicates that the access of the first-type terminal device that supports one antenna is barred, for example, the first field is barred, the terminal device may be barred from accessing the network device. The first field indicates that the access of the first-type terminal device that supports one antenna is allowed, for example, the first field is notbarred, and the terminal device may access the network device.

In a possible implementation, if the terminal device is a first-type terminal device that supports two antennas, the terminal device may access or be barred from accessing the network device based on the second field.

If the terminal device is the first-type terminal device that supports two antennas, and the second field indicates that the access of the first-type terminal device that supports two antennas is barred, the terminal device may be barred from accessing the network device. The second field indicates that the access of the first-type terminal device that supports two antennas is allowed, and the terminal device may access the network device.

In a possible implementation, if the terminal device is a first-type terminal device that supports half-duplex frequency division multiplexing, the terminal device may access or be barred from accessing the network device based on the third field.

If the terminal device is the first-type terminal device that supports half-duplex frequency division multiplexing, and the third field indicates that the access of the first-type terminal device that supports half-duplex frequency division multiplexing is barred, the terminal device may be barred from accessing the network device. The third field indicates that the access of the first-type terminal device that supports half-duplex frequency division multiplexing is allowed, and the terminal device may access the network device.

It should be understood that the first-type terminal device in the foregoing implementation may have a first capability or a second capability. In the foregoing implementation, the first-type terminal device may obtain the first information from the network device, or may not obtain the first information from the network device. Regardless of whether the first-type terminal device obtains the first information from the network device, the first-type terminal device accesses or is barred from accessing the network device based on only the second information instead of the first information.

According to the foregoing method, different methods for the first-type terminal devices accessing or being barred from accessing the network device are designed for supported communication channels of the first-type terminal devices, so that diversity of determining, by the first-type terminal devices, whether to access the network device can be effectively improved.

In a possible implementation, if the terminal device is a second-type terminal device that supports one antenna, the terminal device may access or be barred from accessing the network device based on the first field.

In this embodiment of this application, a method for the second-type terminal device that supports one antenna accessing or being barred from accessing the network device based on the first field is similar to a method for the first-type terminal device that supports one antenna accessing or being barred from accessing the network device based on the first field. Details are not described herein again.

In a possible implementation, if the terminal device is a second-type terminal device that supports two antennas, the terminal device may access or be barred from accessing the network device based on the second field.

In this embodiment of this application, a method for the second-type terminal device that supports two antennas accessing or being barred from accessing the network device based on the second field is similar to a method for the first-type terminal device that supports two antennas accessing or being barred from accessing the network device based on the second field. Details are not described herein again.

In a possible implementation, if the terminal device is a second-type terminal device that supports half-duplex frequency division multiplexing, the terminal device may access or be barred from accessing the network device based on the third field.

In this embodiment of this application, a method for the second-type terminal device that supports half-duplex frequency division multiplexing accessing or being barred from accessing the network device based on the third field is similar to a method for the first-type terminal device that supports half-duplex frequency division multiplexing accessing or being barred from accessing the network device based on the third field. Details are not described herein again.

According to the foregoing method, different methods for the second-type terminal devices accessing or being barred from accessing the network device are designed for supported communication channels of the second-type terminal devices, so that diversity of determining, by the second-type terminal devices, whether to access the network device can be effectively improved.

In a fourth possible implementation, the network device may further send third information to the terminal device. The third information, the first information, and the second information may be carried in a same message, or may be carried in different messages. An example in which a same message carries the first information, the second information, and the third information is used for description. The network device may carry the first information, the second information, and the third information in system information block 1. The third information may indicate that access, to the network device, of at least one of a first-type terminal device that supports one antenna, a first-type terminal device that supports two antennas, or a first-type terminal device that supports half-duplex frequency division multiplexing is barred or allowed.

In an implementation, before accessing or being barred from accessing the network device based on the first information and the third information, the terminal device may further access or be barred from accessing the network device based on an IntraFreqReselection field, a first IntraFreqReselection field, or a second IntraFreqReselection field. For details, refer to descriptions in the second possible implementation. Details are not described herein again.

In an implementation, the third information may be carried by at least one of a fourth field, a fifth field, and a sixth field. This may be explained as follows: The third information is implemented by setting different values for at least one of the fourth field, the fifth field, and the sixth field. The fourth field, the fifth field, and the sixth field are all located in system information block 1.

The fourth field may be referred to as a cellBarredRedCap1Rx-r18 (cellBarredRedCap1Rx-r18) field. The fourth field indicates that the access, to the network device, of the first-type terminal device that supports one antenna is barred or allowed. For example, information carried in the fourth field may be barred or notbarred. When the information carried in the fourth field is barred, it indicates that the access, to the network device, of the first-type terminal device that supports one antenna is barred. When the information carried in the fourth field is notbarred, it indicates that the access, to the network device, of the first-type terminal device that supports one antenna is allowed.

The fifth field may be referred to as a cellBarredRedCap2Rx-r18 (cellBarredRedCap2Rx-r18) field. The fifth field indicates that the access, to the network device, of the first-type terminal device that supports two antennas is barred or allowed. For example, information carried in the fifth field may be barred or notbarred. When the information carried in the fifth field is barred, it indicates that the access, to the network device, of the first-type terminal device that supports two antennas is barred. When the information carried in the fifth field is notbarred, it indicates that the access, to the network device, of the first-type terminal device that supports two antennas is allowed.

The sixth field may be referred to as a halfDuplexRedCapAllowed-r18 (halfDuplexRedCapAllowed-r18) field. The sixth field indicates that the access, to the network device, of the first-type terminal device that supports half-duplex frequency division multiplexing is barred or allowed. For example, information carried in the sixth field may be true. If the sixth field does not exist, it indicates that the access, to the network device, of the first-type terminal device that supports half-duplex frequency division multiplexing is barred. When the information carried in the sixth field is true, it indicates that the access, to the network device, of the first-type terminal device that supports half-duplex frequency division multiplexing is allowed.

The foregoing is merely an example, and specific names of the fourth field, the fifth field, and the sixth field are not limited in this application.

In a possible implementation, if the terminal device is the first-type terminal device that supports one antenna, the terminal device may access or be barred from accessing the network device based on the first information and the fourth field.

For example, the first information indicates that the access of the first-type terminal device to the network device is allowed, and when the fourth field indicates that the access, to the network device, of the first-type terminal device that supports one antenna is allowed, the terminal device may access the network device.

For example, the first information indicates that the access of the first-type terminal device to the network device is barred, or the fourth field indicates that the access, to the network device, of the first-type terminal device that supports one antenna is barred. If the terminal device is the first-type terminal device that supports one antenna, the terminal device may be barred from accessing the network device.

In this embodiment of this application, a method for the first-type terminal device that supports one antenna accessing or being barred from accessing the network device based on the first information and the fourth field is similar to a method for the first-type terminal device that supports one antenna accessing or being barred from accessing the network device based on the first information and the first field. For details, refer to descriptions in the second possible implementation. Details are not described herein again.

In a possible implementation, if the terminal device is the first-type terminal device that supports two antennas, the terminal device may access or be barred from accessing the network device based on the first information and the fifth field.

For example, the first information indicates that the access of the first-type terminal device to the network device is allowed, and when the fifth field indicates that the access, to the network device, of the first-type terminal device that supports two antennas is allowed, the terminal device may access the network device.

For example, the first information indicates that the access of the first-type terminal device to the network device is barred, or the fourth field indicates that the access, to the network device, of the first-type terminal device that supports two antennas is barred. If the terminal device is the first-type terminal device that supports two antennas, the terminal device may be barred from accessing the network device.

In this embodiment of this application, a method for the first-type terminal device that supports two antennas accessing or being barred from accessing the network device based on the first information and the fifth field is similar to a method for the first-type terminal device that supports two antennas accessing or being barred from accessing the network device based on the first information and the second field. For details, refer to descriptions in the second possible implementation. Details are not described herein again.

In a possible implementation, if the terminal device is the first-type terminal device that supports half-duplex frequency division multiplexing, the terminal device may access or be barred from accessing the network device based on the first information and the sixth field.

For example, the first information indicates that the access of the first-type terminal device to the network device is allowed, and when the fifth field indicates that the access, to the network device, of the first-type terminal device that supports half-duplex frequency division multiplexing is allowed, the terminal device may access the network device.

For example, the first information indicates that the access of the first-type terminal device to the network device is barred, or the fourth field indicates that the access, to the network device, of the first-type terminal device that supports half-duplex frequency division multiplexing is barred. If the terminal device is the first-type terminal device that supports half-duplex frequency division multiplexing, the terminal device may be barred from accessing the network device.

In this embodiment of this application, a method for the first-type terminal device that supports half-duplex frequency division multiplexing accessing or being barred from accessing the network device based on first information and the sixth field is similar to a method for the first-type terminal device that supports half-duplex frequency division multiplexing accessing or being barred from accessing the network device based on first information and the sixth field. Details are not described herein again.

It should be understood that when the terminal device accesses or is barred from accessing the network device based on the first information and the third information, a sequence of parsing the first information and the third information by the terminal device is not limited herein.

For details about how the first information indicates that the access of the terminal device to the network device is barred or allowed, or how the terminal device determines, based on the first information, to access or be barred from accessing the network device, refer to descriptions in any one of Implementation 1 to Implementation 3 in the first possible implementation. Details are not described herein again.

According to the foregoing method, different methods for the first-type terminal devices accessing or being barred from accessing the network device are provided for the capabilities and supported communication channels that are of the first-type terminal devices, so that diversity of the first-type terminal devices accessing or being barred from accessing the network device is improved.

In this application, after determining to access the network device, the terminal device may further send capability information to the network device. For details, refer to the following descriptions.

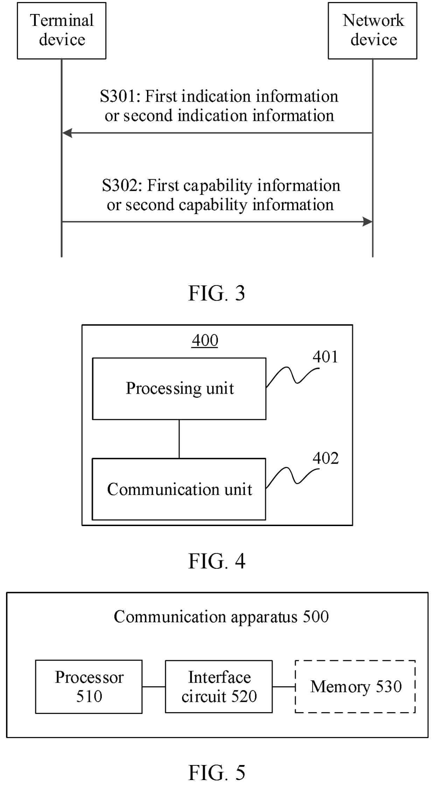

FIG. 3 is a schematic flowchart of an access method according to an embodiment of this application.

In a possible implementation, before a terminal device sends a first capability information or a second capability information to a network device, the method may further include S301.

Optionally, S301: The network device sends first indication information or second indication information.

Correspondingly, the terminal device receives the first indication information or the second indication information from the network device.

The first indication information indicates the terminal device to report the first capability information, and the second indication information indicates the terminal device to report the second capability information.

In another possible implementation, the terminal device actively sends the first capability information or the second capability information to the network device without considering whether the terminal device receives the first indication information or the second indication information from the network device.

S302: The terminal device sends the first capability information or the second capability information to the network device. The first capability information indicates that the terminal device has a first capability, and the second capability information indicates that the terminal device has a second capability.

Correspondingly, the network device receives the first capability information or the second capability information from the terminal device.

The first capability information or the second capability information may be indicated through any one of the following messages: a message 1 (message 1, Msg1) in a random access process, a message A (message A, MsgA) in the random access process, a message 3 (message 3, Msg3) in the random access process, and radio resource control (radio resource control, RRC) signaling. Random access types corresponding to the message 1 and the message 3 are 4-step random access, and a random access type corresponding to the message A is 2-step random access.

In this embodiment of this application, when the first capability information or the second capability information is indicated through the message 3, there is a correspondence between a capability of the terminal device and a logical channel identifier (Logical channel identifier, LCID). To be specific, the first capability corresponds to a first logical channel identifier, and the second capability corresponds to a second logical channel identifier. The correspondence is predefined, preconfigured, or configured by the network device. The first logical channel identifier is different from the second logical channel identifier.

For example, the first capability information may be the first logical channel identifier corresponding to the first capability, and the second capability information may be the second logical channel identifier corresponding to the second capability. A value of the first logical channel identifier may be one of 37 to 42; and a value of the second logical channel identifier may be one of 37 to 42.

When the capability of the terminal device is the first capability, the first capability information included in the message 3 sent by the terminal device is the first logical channel identifier. When receiving the message 3 including the first logical channel identifier, the network device determines that the terminal device is a first-type terminal device having the first capability.

When the capability of the terminal device is the second capability, the second capability information included in the message 3 sent by the terminal device is the second logical channel identifier. When receiving the message 3 including the second logical channel identifier, the network device determines that the terminal device is a first-type terminal device having the second capability.

For example, the value of the first logical channel identifier is 37, and the value of the second logical channel identifier is 38.

When the capability of the terminal device is the first capability, a logical channel identifier included in the message 3 sent by the terminal device is 37. When receiving the message 3 including the logical channel identifier being 37, the network device determines that the terminal device is the first-type terminal device having the first capability.

When the capability of the terminal device is the second capability, a logical channel identifier included in the message 3 sent by the terminal device is 38. When receiving the message 3 including the logical channel identifier being 38, the network device determines that the terminal device is the first-type terminal device having the second capability.

In this embodiment of this application, the message 3 may further indicate whether the terminal device is a first-type terminal device. For example, there is a correspondence between a first-type terminal device and a third logical channel identifier. The correspondence is predefined, preconfigured, or configured by the network device. For example, a value of the third logical channel identifier may be one of 37 to 42.

When the terminal device is the first-type terminal device, the message 3 sent by the terminal device includes the third logical channel identifier. When receiving the message 3 including the third logical channel identifier, the network device determines that the terminal device is the first-type terminal device.

In this embodiment of this application, when the first capability information or the second capability information is indicated through the message 1 or the message A, there is a correspondence between a capability of the terminal device and a transmission resource for the message 1 or the message A. In other words, the first capability corresponds to a first transmission resource, and the second capability corresponds to a second transmission resource. The correspondence is predefined, preconfigured, or configured by the network device.

The transmission resource includes one or more of the following: a physical random access channel (physical random access channel, PRACH) time domain resource, a PRACH frequency domain resource, a PRACH code domain resource, a PRACH transmission opportunity, and a preamble (preamble) sequence.

If the capability of the terminal device is the first capability, that the terminal device has the first capability is indicated by using the first transmission resource. The first transmission resource may be an existing transmission resource for the message 1 or the message A.

If the capability of the terminal device is the second capability, that the terminal device has the second capability is indicated by using the second transmission resource. The second transmission resource may be a newly defined transmission resource used to transmit the message 1 or the message A.

For example, when the transmission resource is the preamble sequence, currently, a preamble sequence 1 to a preamble sequence 64 are defined as a transmission resource, and the first transmission resource is the existing transmission resource for the message 1 or the message A. Therefore, the first transmission resource includes the preamble sequence 1 to the preamble sequence 64. The second transmission resource is the newly defined transmission resource used to transmit the message 1 or the message A. Therefore, the second transmission resource may include a preamble sequence 65 to a preamble sequence 128.

The first capability information is a preamble sequence sent by the terminal device. The message 1 or the message A sent by the terminal device includes one of the preamble sequence 1 to the preamble sequence 64, indicating that the capability of the terminal device is the first capability.

The second capability information may also be a preamble sequence sent by the terminal device. The message 1 or the message A sent by the terminal device includes one of the preamble sequence 65 to the preamble sequence 128, indicating that the capability of the terminal device is the second capability.

It should be understood that the correspondence between a capability of the terminal device and a transmission resource for the message 1 or the message A may be predefined or preconfigured, or may be configured by the network device.

In the foregoing method, a type or a capability of a terminal device is indicated in advance in an initial access process, so that the network device can schedule, for the terminal device based on the type or the capability of the terminal device, a resource that matches the type or the capability of the terminal device, thereby improving resource utilization and system efficiency.

The foregoing method procedures may be independently implemented, or may be implemented in combination. This is not limited in this application.

In the foregoing embodiments provided in this application, the method provided in embodiments of this application is described from a perspective of interaction between devices. To implement functions in the method provided in embodiments of this application, the network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software function module.

Same as the foregoing concept, as shown in FIG. 4, an embodiment of this application further provides a communication apparatus 400, configured to implement a function of the network device or the terminal device in the foregoing methods. For example, the apparatus may be a software module or a chip system. In this embodiment of this application, the chip system may include a chip, or may include a chip and another discrete component. The communication apparatus 400 may include a processing unit 401 and a communication unit 402.

In embodiments of this application, the processing unit may also be referred to as a processor, a processing board, a processing module, a processing apparatus, or the like. The communication unit may also be referred to as a transceiver, a transceiver machine, a transceiver apparatus, a transceiver unit, or the like. The transceiver unit may include a sending unit and/or a receiving unit, configured to perform sending and receiving steps of the network device or the terminal device in the foregoing method embodiments.

The communication apparatus provided in this embodiment of this application is described below with reference to FIG. 4 and FIG. 5. It should be understood that description of apparatus embodiments corresponds to the description of the method embodiments. Therefore, for content that is not described in detail, refer to the foregoing method embodiments. For brevity, details are not described herein again.

In an implementation, the communication apparatus 400 may perform the following functions.

The communication unit is configured to receive first information. The first information indicates that access of a first-type terminal device is barred or allowed, a baseband processing bandwidth of the first-type terminal device is less than a maximum transmission bandwidth, a peak data transmission rate of the first-type terminal device is less than a peak data transmission rate of a second-type terminal device, a baseband processing bandwidth of the second-type terminal device is equal to a maximum transmission bandwidth, or the first-type terminal device meets a first condition.

The processing unit is configured to access or be barred from accessing a network device based on the first information.

In an implementation, the communication apparatus 400 may perform the following functions.

The processing unit is configured to generate first information. The first information indicates that access of a first-type terminal device is barred or allowed, a baseband processing bandwidth of the first-type terminal device is less than a maximum transmission bandwidth, a peak data transmission rate of the first-type terminal device is less than a peak data transmission rate of a second-type terminal device, a baseband processing bandwidth of the second-type terminal device is equal to a maximum transmission bandwidth, or the first-type terminal device meets a first condition.

The communication unit is configured to send the first information.

The foregoing is merely an example. The processing unit 401 and the communication unit 402 may further perform other functions. For more detailed descriptions, refer to the related descriptions in the foregoing method embodiments. Details are not described herein again.

FIG. 5 shows a communication apparatus 500 according to an embodiment of this application. The apparatus shown in FIG. 5 may be an implementation of a hardware circuit of the apparatus shown in FIG. 4. The communication apparatus is applicable to the foregoing flowcharts, and performs functions of the network device or the terminal device in the foregoing method embodiments. For ease of description, FIG. 5 shows only main components of the communication apparatus.

As shown in FIG. 5, the communication apparatus 500 includes a processor 510 and an interface circuit 520. The processor 510 and the interface circuit 520 are coupled to each other. It may be understood that the interface circuit 520 may be a transceiver or an input/output interface.

Optionally, in an implementation, the communication apparatus 500 may further include a memory 530, configured to: store instructions executed by the processor 510, store input data required for running instructions by the processor 510, or store data generated after the processor 510 runs instructions.

When the communication apparatus 500 is configured to implement the foregoing method, the processor 510 is configured to implement a function of the processing unit 401, and the interface circuit 520 is configured to implement a function of the communication unit 402.

It should be understood that the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium or write information into the storage medium. Certainly, the storage medium may be a component of the processor. The processor and the storage medium may be disposed in an ASIC.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

The computer program instructions may be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of protection defined by the following claims and their equivalent technologies.

## Claims

1. An access method, comprising:
receiving first information, wherein the first information indicates that access of a first-type terminal device is barred or allowed, and the first-type terminal device meets a first condition; and
accessing or being barred from accessing a network device based on the first information.

2. The method according to claim 1, wherein the method further comprises:
receiving second information, wherein the second information indicates that access of the second-type terminal device to the network device is barred or allowed, and the second-type terminal device meets a second condition; and
accessing or being barred from accessing the network device based on the first information comprises:
accessing or being barred from accessing the network device based on the first information and the second information.

3. The method according to claim 1 or 2, wherein the first information is comprised in system information block 1; or
the first information and the second information are comprised in system information block 1.

4. The method according to claim 3, wherein the method further comprises:
system information block 1 comprises a first IntraFreqReselection field, and the first IntraFreqReselection field indicates that the access of the first-type terminal device and the second-type terminal device to the network device is barred or allowed; or
system information block 1 comprises a first IntraFreqReselection field and a second IntraFreqReselection field, the first IntraFreqReselection field indicates that the access of the first-type terminal device to the network device is barred or allowed, and the second IntraFreqReselection field indicates that the access of the second-type terminal device to the network device is barred or allowed, wherein
accessing or being barred from accessing a current network is determined based on the first IntraFreqReselection field comprised in system information block 1.

5. The method according to any one of claims 2 to 4, wherein the second information is carried in at least one of a first field, a second field, and a third field; and
the first field indicates that access, to the network device, of the first-type terminal device and the second-type terminal device that each support one antenna is barred or allowed, the second field indicates that access, to the network device, of the first-type terminal device and the second-type terminal device that each support two antennas is barred or allowed, and the third field indicates that access, to the network device, of the first-type terminal device and the second-type terminal device that support half-duplex frequency division multiplexing is barred or allowed.

6. The method according to claim 5, wherein accessing or being barred from accessing the network device based on the first information and the second information comprises:
when a terminal device is the first-type terminal device that supports one antenna, accessing or being barred from accessing the network device based on the first information and the first field; or
when the terminal device is the first-type terminal device that supports two antennas, accessing or being barred from accessing the network device based on the first information and the second field; or
when the terminal device is the first-type terminal device that supports half-duplex frequency division multiplexing, accessing or being barred from accessing the network device based on the first information and the third field.

7. The method according to any one of claims 1 to 6, wherein a capability of the first-type terminal device comprises a first capability or a second capability; and
the first information comprises first sub-information and second sub-information, the first sub-information indicates that access of the first-type terminal device having the first capability is barred or allowed, and the first sub-information and the second sub-information indicate that access of the first-type terminal device having the second capability is barred or allowed.

8. The method according to claim 7, wherein accessing or being barred from accessing the network device based on the first information comprises:
when the terminal device is the first-type terminal device having the first capability, and the first sub-information indicates that the access of the first-type terminal device is allowed, accessing the network device; or
when the terminal device is the first-type terminal device having the first capability, and the first sub-information indicates that the access of the first-type terminal device is barred, being barred from accessing the network device; or
when the terminal device is the first-type terminal device having the second capability, the first sub-information indicates that the access of the first-type terminal device is allowed, and the second sub-information indicates that the access of the first-type terminal device having the second capability is allowed, accessing the network device; or
when the terminal device is the first-type terminal device having the second capability, and the first sub-information indicates that the access of the first-type terminal device is barred, or the second sub-information indicates that the access of the first-type terminal device having the second capability is barred, being barred from accessing the network device.

9. The method according to any one of claims 1 to 6, wherein a capability of the first-type terminal device comprises a first capability or a second capability; and
the first information comprises third sub-information and fourth sub-information, the third sub-information indicates that access of the first-type terminal device having the first capability is barred or allowed, and the fourth sub-information indicates that access of the first-type terminal device having the second capability is barred or allowed.

10. The method according to claim 9, wherein accessing or being barred from accessing the network device based on the first information comprises:
when the terminal device is the first-type terminal device having the first capability, and the third sub-information indicates that the access of the first-type terminal device having the first capability is allowed, accessing the network device; or
when the terminal device is the first-type terminal device having the second capability, and the fourth sub-information indicates that the access of the first-type terminal device having the second capability is allowed, accessing the network device; or
when the terminal device is the first-type terminal device having the first capability, and the third sub-information indicates that the access of the first-type terminal device having the first capability is barred, being barred from accessing the network device; or
when the terminal device is the first-type terminal device having the second capability, and the fourth sub-information indicates that the access of the first-type terminal device having the second capability is barred, being barred from accessing the network device.

11. The method according to any one of claims 1 to 10, wherein the method further comprises:
sending first capability information or second capability information to the network device, wherein the first capability information indicates the first capability, and the second capability information indicates the second capability.

12. The method according to claim 11, wherein the first capability information or the second capability information is indicated through any one of the following messages:
a message 1 in a random access process, a message A in a random access process, a message 3 in a random access process, and radio resource control RRC signaling.

13. The method according to claim 11 or 12, wherein the first capability information is a first logical channel identifier corresponding to the first capability, and the second capability information is a second logical channel identifier corresponding to the second capability.

14. The method according to claim 13, wherein a value of the first logical channel identifier is one of 37 to 42; and
a value of the second logical channel identifier is one of 37 to 42, and the first logical channel identifier is different from the second logical channel identifier.

15. The method according to any one of claims 11 to 14, wherein the method further comprises:
receiving first indication information or second indication information from the network device, wherein the first indication information indicates to report the first capability information, and the second indication information indicates to report the second capability information.

16. An access method, comprising:
generating first information, wherein the first information indicates that access of a first-type terminal device is barred or allowed, and the first-type terminal device meets a first condition; and
sending the first information.

17. The method according to claim 16, wherein the method further comprises:
sending second information, wherein the second information indicates that access of the second-type terminal device to a network device is barred or allowed, and the second-type terminal device meets a second condition.

18. The method according to claim 16 or 17, wherein the first information is comprised in system information block 1; or
the first information and the second information are comprised in system information block 1.

19. The method according to claim 18, wherein the method further comprises:
if the access of the first-type terminal device is allowed, system information block 1 comprises a first IntraFreqReselection field, and the first IntraFreqReselection field indicates that the access of the first-type terminal device and the second-type terminal device to the network device is barred or allowed; or
system information block 1 comprises a first IntraFreqReselection field and a second IntraFreqReselection field, the first IntraFreqReselection field indicates that the access of the first-type terminal device to the network device is barred or allowed, and the second IntraFreqReselection field indicates that the access of the second-type terminal device to the network device is barred or allowed.

20. The method according to any one of claims 17 to 19, wherein the second information is carried in at least one of a first field, a second field, and a third field; and
the first field indicates that access of the first-type terminal device and the second-type terminal device that each support one antenna is barred or allowed, the second field indicates that access of the first-type terminal device and the second-type terminal device that each support two antennas is barred or allowed, and the third field indicates that access of the first-type terminal device and the second-type terminal device that support half-duplex frequency division multiplexing is barred or allowed.

21. The method according to any one of claims 16 to 20, wherein a capability of the first-type terminal device comprises a first capability or a second capability; and
the first information comprises first sub-information and second sub-information, the first sub-information indicates that access of the first-type terminal device having the first capability is barred or allowed, and the first sub-information and the second sub-information indicate that access of the first-type terminal device having the second capability is barred or allowed.

22. The method according to any one of claims 16 to 20, wherein a capability of the first-type terminal device comprises a first capability or a second capability; and
the first information comprises third sub-information and fourth sub-information, the third sub-information indicates that access of the first-type terminal device having the first capability is barred or allowed, and the fourth sub-information indicates that access of the first-type terminal device having the second capability is barred or allowed.

23. The method according to any one of claims 16 to 22, wherein the method further comprises:
receiving the first capability information or the second capability information from the terminal device, wherein the first capability information indicates the first capability, and the first capability information indicates the second capability.

24. The method according to claim 23, wherein the first capability information or the second capability information is indicated through any one of the following messages:
a message 1 in a random access process, a message A in a random access process, a message 3 in a random access process, and radio resource control RRC signaling.

25. The method according to claim 23 or 24, wherein the first capability information is a first logical channel identifier corresponding to the first capability, and the second capability information is a second logical channel identifier corresponding to the second capability.

26. The method according to claim 25, wherein a value of the first logical channel identifier is one of 37 to 42; and
a value of the second logical channel identifier is one of 37 to 42, and the first logical channel identifier is different from the second logical channel identifier.

27. The method according to any one of claims 23 to 26, wherein the method further comprises:
sending first indication information or second indication information, wherein the first indication information indicates to report the first capability information, and the second indication information indicates to report the second capability information.

28. A communication apparatus, comprising:
a communication unit, configured to receive first information, wherein the first information indicates that access of a first-type terminal device is barred or allowed, and the first-type terminal device meets a first condition; and
a processing unit, configured to access or be barred from accessing a network device based on the first information.

29. The apparatus according to claim 28, wherein the communication unit is further configured to:
receive second information, wherein the second information indicates that access of the second-type terminal device to the network device is barred or allowed, and the second-type terminal device meets a second condition; and
the processing unit is specifically configured to:
access or be barred from accessing the network device based on the first information and the second information.

30. The apparatus according to claim 28 or 29, wherein the first information is comprised in system information block 1; or
the first information and the second information are comprised in system information block 1.

31. The apparatus according to claim 30, wherein
system information block 1 comprises a first IntraFreqReselection field, and the first IntraFreqReselection field indicates that the access of the first-type terminal device and the second-type terminal device to the network device is barred or allowed; or
system information block 1 comprises a first IntraFreqReselection field and a second IntraFreqReselection field, the first IntraFreqReselection field indicates that the access of the first-type terminal device to the network device is barred or allowed, and the second IntraFreqReselection field indicates that the access of the second-type terminal device to the network device is barred or allowed, wherein
the processing unit is further configured to determine to access or be barred from accessing a current network based on the first IntraFreqReselection field comprised in system information block 1.

32. The apparatus according to any one of claims 29 to 31, wherein the second information is carried in at least one of a first field, a second field, and a third field; and
the first field indicates that access, to the network device, of the first-type terminal device and the second-type terminal device that each support one antenna is barred or allowed, the second field indicates that access, to the network device, of the first-type terminal device and the second-type terminal device that each support two antennas is barred or allowed, and the third field indicates that access, to the network device, of the first-type terminal device and the second-type terminal device that support half-duplex frequency division multiplexing is barred or allowed.

33. The apparatus according to claim 32, wherein accessing or being barred from accessing the network device based on the first information and the second information comprises:
when the communication apparatus is the first-type terminal device that supports one antenna, accessing or being barred from accessing the network device based on the first information and the first field; or
when the communication apparatus is the first-type terminal device that supports two antennas, accessing or being barred from accessing the network device based on the first information and the second field; or
when the communication apparatus is the first-type terminal device that supports half-duplex frequency division multiplexing, accessing or being barred from accessing the network device based on the first information and the third field.

34. The apparatus according to any one of claims 28 to 33, wherein a capability of the first-type terminal device comprises a first capability or a second capability; and
the first information comprises first sub-information and second sub-information, the first sub-information indicates that access of the first-type terminal device having the first capability is barred or allowed, and the first sub-information and the second sub-information indicate that access of the first-type terminal device having the second capability is barred or allowed.

35. The apparatus according to claim 34, wherein the processing unit is further configured to:
when the communication apparatus is the first-type terminal device having the first capability, and the first sub-information indicates that the access of the first-type terminal device is allowed, access the network device; or
when the communication apparatus is the first-type terminal device having the first capability, and the first sub-information indicates that the access of the first-type terminal device is barred, be barred from accessing the network device; or
when the communication apparatus is the first-type terminal device having the second capability, the first sub-information indicates that the access of the first-type terminal device is allowed, and the second sub-information indicates that the access of the first-type terminal device having the second capability is allowed, access the network device; or
when the communication apparatus is the first-type terminal device having the second capability, the first sub-information indicates that the access of the first-type terminal device is barred, or the second sub-information indicates that the access of the first-type terminal device having the second capability is barred, be barred from accessing the network device.

36. The apparatus according to any one of claims 28 to 32, wherein a capability of the first-type terminal device comprises a first capability or a second capability; and
the first information comprises third sub-information and fourth sub-information, the third sub-information indicates that access of the first-type terminal device having the first capability is barred or allowed, and the fourth sub-information indicates that access of the first-type terminal device having the second capability is barred or allowed.

37. The apparatus according to claim 36, wherein the processing unit is further configured to:
when the communication apparatus is the first-type terminal device having the first capability, and the third sub-information indicates that the access of the first-type terminal device having the first capability is allowed, access the network device; or
when the communication apparatus is the first-type terminal device having the second capability, and the fourth sub-information indicates that the access of the first-type terminal device having the second capability is allowed, access the network device; or
when the communication apparatus is the first-type terminal device having the first capability, and the third sub-information indicates that the access of the first-type terminal device having the first capability is barred, be barred from accessing the network device; or
when the communication apparatus is the first-type terminal device having the second capability, and the fourth sub-information indicates that the access of the first-type terminal device having the second capability is barred, be barred from accessing the network device.

38. The apparatus according to any one of claims 28 to 37, wherein the communication unit is further configured to:
send first capability information or second capability information to the network device, wherein the first capability information indicates the first capability, and the second capability information indicates the second capability.

39. The apparatus according to claim 38, wherein the first capability information or the second capability information is indicated through any one of the following messages:
a message 1 in a random access process, a message A in a random access process, a message 3 in a random access process, and radio resource control RRC signaling.

40. The apparatus according to claim 38 or 39, wherein the first capability information is a first logical channel identifier corresponding to the first capability, and the second capability information is a second logical channel identifier corresponding to the second capability.

41. The apparatus according to claim 40, wherein a value of the first logical channel identifier is one of 37 to 42; and
a value of the second logical channel identifier is one of 37 to 42, and the first logical channel identifier is different from the second logical channel identifier.

42. The apparatus according to any one of claims 38 to 41, wherein the communication unit is further configured to:
receive first indication information or second indication information from the network device, wherein the first indication information indicates to report the first capability information, and the second indication information indicates to report the second capability information.

43. A communication apparatus, comprising:
a processing unit, configured to generate first information, wherein the first information indicates that access of a first-type terminal device is barred or allowed, and the first-type terminal device meets a first condition; and
a communication unit, configured to send the first information.

44. The apparatus according to claim 43, wherein the communication unit is further configured to:
send second information, wherein the second information indicates that access of the second-type terminal device to a network device is barred or allowed, and the second-type terminal device meets a second condition.

45. The apparatus according to claim 43 or 44, wherein the first information is comprised in system information block 1; or
the first information and the second information are comprised in system information block 1.

46. The apparatus according to claim 45, wherein
if the access of the first-type terminal device is allowed, system information block 1 comprises a first IntraFreqReselection field, and the first IntraFreqReselection field indicates that the access of the first-type terminal device and the second-type terminal device to the network device is barred or allowed; or
system information block 1 comprises a first IntraFreqReselection field and a second IntraFreqReselection field, the first IntraFreqReselection field indicates that the access of the first-type terminal device to the network device is barred or allowed, and the second IntraFreqReselection field indicates that the access of the second-type terminal device to the network device is barred or allowed.

47. The apparatus according to any one of claims 43 to 46, wherein the second information is carried in at least one of a first field, a second field, and a third field; and
the first field indicates that access of the first-type terminal device and the second-type terminal device that each support one antenna is barred or allowed, the second field indicates that access of the first-type terminal device and the second-type terminal device that each support two antennas is barred or allowed, and the third field indicates that access of the first-type terminal device and the second-type terminal device that support half-duplex frequency division multiplexing is barred or allowed.

48. The apparatus according to any one of claims 43 to 47, wherein a capability of the first-type terminal device comprises a first capability or a second capability; and
the first information comprises first sub-information and second sub-information, the first sub-information indicates that access of the first-type terminal device having the first capability is barred or allowed, and the first sub-information and the second sub-information indicate that access of the first-type terminal device having the second capability is barred or allowed.

49. The apparatus according to any one of claims 43 to 48, wherein the capability of the first-type terminal device comprises the first capability or the second capability; and
the first information comprises third sub-information and fourth sub-information, the third sub-information indicates that access of the first-type terminal device having the first capability is barred or allowed, and the fourth sub-information indicates that access of the first-type terminal device having the second capability is barred or allowed.

50. The apparatus according to any one of claims 43 to 49, wherein the communication unit is further configured to:
receive the first capability information or the second capability information from the terminal device, wherein the first capability information indicates the first capability, and the first capability information indicates the second capability.

51. The apparatus according to claim 50, wherein the first capability information or the second capability information is indicated through any one of the following messages:
a message 1 in a random access process, a message A in a random access process, a message 3 in a random access process, and radio resource control RRC signaling.

52. The apparatus according to claim 50 or 51, wherein the first capability information is a first logical channel identifier corresponding to the first capability, and the second capability information is a second logical channel identifier corresponding to the second capability.

53. The apparatus according to claim 52, wherein a value of the first logical channel identifier is one of 37 to 42; and
a value of the second logical channel identifier is one of 37 to 42, and the first logical channel identifier is different from the second logical channel identifier.

54. The apparatus according to any one of claims 50 to 53, wherein the communication unit is further configured to:
send first indication information or second indication information, wherein the first indication information indicates to report the first capability information, and the second indication information indicates to report the second capability information.

55. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 27 by using a logic circuit or by executing code instructions.

56. A computer program product, comprising instructions, wherein when the instructions are executed, the method according to any one of claims 1 to 27 is implemented.

57. A chip, comprising a processor, wherein the processor is coupled to a memory, and is configured to execute a computer program or instructions stored in the memory, to enable the chip to implement the method according to any one of claims 1 to 27.

58. A computer-readable storage medium, wherein the storage medium stores a computer program or instructions, and when the computer program or the instructions are executed by a communication apparatus, the method according to any one of claims 1 to 27 is implemented.
